# EUROPEAN PATENT SPECIFICATION

(11) **EP 2 495 340 B1**
(45) Date of publication and mention of the grant of the patent: **11.09.2013**
(21) Application number: 11156907.5
(22) Date of filing: 04.03.2011
(51) Int. Cl.: C21D 1/10, C21D 9/28, C22C 38/22, C22C 38/24, C21D 9/00

(54) **A forged roll meeting the requirements of the cold rolling industry and a method for production of such a roll**
Geschmiedete Rolle gemäß Anforderungen der Kaltwalzindustrie und Verfahren zur Herstellung einer derartigen Rolle
Rouleau forgé répondant aux exigences de l'industrie du roulage à froid et procédé de production d'un tel rouleau

(43) Date of publication of application: 05.09.2012
(73) Proprietor: Åkers AB, 647 51 Åkers Styckebruk (SE)
(72) Inventor: Gaspard, Claude, 4550, YERNEE-FRAINEUX (NANDRIN) (BE); Vergne, Catherine, 5300, LANDENNE (BE); Batazzi, Daniel, 4610, BEYNE-HEUSAY (BE)
(74) Representative: Kitzler, Michael

(56) References cited:
- GB-A- 2 262 745
- GB-A- 2 367 075
- JP-A- 3 122 251
- JP-A- 3 219 048
- JP-A- 6 017 196
- JP-A- 6 145 886

## Description

### Field of invention

This invention relates in general to the field of forged rolls and to production of forged rolls. More particularly the present invention relates to forged rolls meeting the requirements of and mainly being directed for use in the cold rolling industry.

### Background

### General background

The general trend for development in cold rolling both for the ferrous and the non-ferrous metal industries is to roll faster, thinner and wider. The current challenge is to do this while achieving perfect control of flatness, thickness and surface aspects compatible with a high productivity. Therefore, this trend calls for use of advanced rolling technologies that control key rolling parameters.

Some key parameters such as roughness retention and surface aspects can be guaranteed through chrome plating of work rolls. This practice is effective and efficient, but is becoming more and more questionable and in a near future unacceptable due to environmental restrictions.

Nowadays forged work rolls (2 to 6 %Cr) with surface chrome plating are usually used in cold rolling processes. Chrome plating of such rolls is applied to improve the wear resistance in terms of surface texture retention which, in turn, will ensure, for instance, consistent and higher gloss of car bodies after painting. Hard electrolytic deposit techniques as chrome plating were initially developed for temper/skin pass mill applications. In these applications, chrome plated work rolls exhibit 2 to 8 times longer lifetimes than uncoated rolls, mainly because of a better roughness retention. The implementation of this technique was progressively extended to the reduction mills.

There are also forged rolls made of high speed steel (HSS) which are made intended for use without coating but there is a need for a roll with low residual internal stresses and there is also a need for an industrial process for producing such a roll, which is intended to be used without coating in a mill while giving roughness retention which is at least equivalent to that of coated rolls.

### Specific background

Rolls produced to be used within the cold rolling industry has to manage the processing conditions or the specific operating stresses during usage without getting cracks or be prone to explode. Explosion of a roll can involve safety of operating persons and collateral damage in the mill. Therefore there is a need for a roll with low residual internal stresses.

### Prior art

Examples of prior art disclosing the development towards HSS rolls without coatings for the purpose of cold rolling:
C. Gaspard, C. Vergne, D. Batazzi, T. Nylen, P.H. Bolt, S. Mul, K.M. Reuver:
   *"Implementation of in-service key parameters of HSS work roll grade dedicated to advanced cold rolling",* IST Conference May 3-6, 2010, Pittsburgh, Pa, USA
C. Gaspard, S. Bataille, D. Batazzi, P.Thonus: "Improvement For Advanced Cold Rolling Reduction Mills By Using Semi-HSS and HSS Rolls ", 7th International Conference on Steel Rolling (ISIJ), Makuhari, Chiba, Japan, 1998
P.H. Bolt, D. Batazzi, N.P. Belfiore, C. Gaspard, L. Goiset, M. Laugier, O. Lemaire, D. Matthews, T. Nylén, K. Reuver, D. Stocchi, F. Stork, J. Tensen, M. Tornicelli, R. Valle, E. van den Elzen, C. Vergne, I.M. Williams: " Damage Resistance and Roughness Retention of work Rolls in cold Rolling Mills ", 5th European Rolling Conference, 23-25 June 2009, London, UK
Other examples of prior art are shown in the patent publications: JP09003603, JP531077821, JP57047849, , JP2002285284, JP2002285285, JP10317102, JP1208437, EP0395477 and JP08158018 which describe work rolls for cold rolling to enhance wear and spalling resistance.

However, these pieces of prior art lack the disclosure of parameters and properties necessary to achieve and enable such an HSS roll that is operative during the conditions in a cold rolling mill.

### Object of the Invention

### General object

The general object of the invention is to provide a roll and an industrial process for producing such a roll that is operative during the conditions in a cold rolling mill, preferably in a non-coated form. A more specific object is to provide such a roll and process for producing such a roll while keeping tribological properties such as low friction coefficient, high roughness retention, no dust pollution by iron fines at least equivalent to prior art coated rolls and which exhibit improved mill performances in terms of higher crack resistance and higher safety in operation compared to known rolls.

### Partial problems

The invention further seeks to solve the partial problems of:
- Improving the roll surface which gives the roll higher performance.
- Avoiding roll spalling accidents
- Avoiding non-environmental rolling production processes
- Improving rolling distance or life span of a roll, allowing longer runs per mill campaign.

### Summary of the invention

The solution to the problem, partial problems and aspects listed above is a roll according to the invention with improved fire crack resistance and low crack propagation which will reduce the sensitivity to mill incidents while keeping higher wear resistance.

The present invention provides a forged roll for use in the cold rolling industry and a method for production of such a roll. The roll is preferably non-coated but may also be coated.

The invention relates to a forged roll according to the present claims.

In other embodiments of the invention the roll of the invention comprises an open eutectic carbide network delimits a cell-like pattern of eutectic cells.

Further varieties of the roll comprising any of the following optional, individual or combinable aspects:
JP 3122251 A discloses a composite roll for rolling metal and its production.
JP 6145886 A discloses material for a rolling roll.
GB 2367075 A discloses a roll for rolling.
GB 2262745 A discloses use of steel for cold-rollers
JP 3219048 A discloses a rolling roll made of forged steel.
JP 6017196 A discloses a work roll for skinpass rolling.
JP 1208437 A discloses a high chromium steel material of improved cuttability.
JP6212253 A production of cold tool steel.
JP59179762 A discloses a cold tool steel.
EP0869196 A2 discloses a cast cold tool and method for producing the same

A roll wherein the open eutectic carbide network of said roll comprises dendritic arms.

A roll wherein the open eutectic carbide network of said roll is formed as substantially isolated portions of eutectic carbides network.

A roll wherein the microstructure of said roll is present at least in the working layer of the roll.

A roll with a steel composition consisting, in terms of % per weight;
0.8 to less than (<) 1%C,
0.2 to 0.5 % Mn,
0.2 to 2.0 % Si,
7.0 to 13.0 % Cr,
0.6 to 1.6 % Mo,
more than (>) 1.0 to 3.0 % V,
less than (<) 0.015 % P, and
less than (<) 0.015 % S, and
less than (<) 1%Ni
less than 30 ppm O2, and
less than (<) 100 ppm N2, and
less than (<) 3 ppm H2
less than (<) 2 % W, and
less than (<) 1 % Nb, and
less than (<) 1 % Ti, and
less than (<) 0_{.}5 % Ta, and
less than (<) 0.5% Zr,
the remaining portion of the steel being substantially Fe and possible incidental and/or possibly unavoidable impurities;

The roll according to the invention, wherein the C content in the steel composition is between 0.8 - 0.99%C in terms of % per weight of total roll weight.

The roll according to the invention, wherein the C content in the steel composition is between 0.85 - 0.9 % C in terms of % per weight of total roll weight.

The roll according to the invention, wherein the Mn content in the steel composition is between 0.4 - 0.5 % Mn in terms of % per weight of total roll weight.

The roll according to the invention, wherein the Si content in the steel composition is between 0.2 - 1.5 % Si in terms of % per weight of total roll weight.

The roll according to the invention, wherein the Si content in the steel composition is between 0.85 -1.15 % Si in terms of % per weight of total roll weight.

The roll according to the invention, wherein the Cr content in the steel composition is between 7.0 - 11 % Cr in terms of % per weight of total roll weight.

The roll according to the invention, wherein the Cr content in the steel composition is between 7.3 - less than (<) 8.0 % Cr in terms of % per weight of total roll weight.

The roll according to the invention, wherein the Mo content in the steel composition is between 1.45 - 1.55 % Mo in terms of % per weight of total roll weight.

The roll according to the invention, wherein the Ni content in the steel composition is less than (<) 0.3 Ni in terms of % per weight of total roll weight.

The roll according to the invention, wherein the V content in the steel composition is between 1.3 - 2.1 % V in terms of % per weight of total roll weight.

The roll according to the invention, wherein the V content in the steel composition is between 1.3 -1_{.}6 % V in terms of % per weight of total roll weight.

A roll according to the invention, wherein the steel composition consists, in terms of % per weight:
0.8 - 0.99 % C, and
0.4 - 0.5 % Mn, and
0.2 - 1.5 % Si, and
7.0-11%Cr,and
0.6 -1.6 % Mo, and
less than (<) 1.0 Ni, and
1.0-2,1%V ,and
less than (<) 0.015 % P, and
less than (<) 0.015 % S, and
less than (<) 30 ppm O2, and
less than (<) 100 ppm N2, and
less than (<) 3 ppm H2, and
the remaining portion of the roll being substantially Fe and possible incidental and/or possibly unavoidable impurities.

A roll according to the invention, wherein the steel composition consists, in terms of % per weight:
0.85 - 0.9 % C, and
0.4 - 0.5 % Mn, and
0.85 -1.15 % Si, and
7.3 - less than (<) 8.0 % Cr, and
1.45 - 1.55 % Mo, and
less than (<) 0.3 Ni, and
1.3-1.6 % V and
less than (<) 0.015 % P, and
less than (<) 0.015 % S, and
less than (<) 30 ppm O2, and
less than (<) 100 ppm N2, and
less than (<) 3 ppm H2, and
the remaining portion of the roll being substantially Fe and possible incidental and/or possibly unavoidable impurities.

A roll according to the invention further being configured for use as a working roll in cold rolling.

A roll according to the invention further having a weight of more than 400 kg.

A roll according to the invention further having a diameter in the range of 215-800mm.

A further aspect of the invention provides a process for manufacturing a roll according to the invention, the process comprising the steps of:
a. Providing a steel composition according to claim 1.
b. Manufacturing an ingot maintaining a solidification rate higher than 15°C/min in the working layer of the ingot, equivalent to the working layer of the roll, in the solidification interval;
c. Forging the ingot to a roll;
d. Hardening the roll by induction heating;
e. Tempering the roll at a temperature between 450-530°C to reach hardness between 780 HV to 840 HV;
thereby achieving a microstructure of the roll (1) that comprises:
- tempered martensite with a retained austenite rate less than (<) 5 % per volume; and
- an open eutectic carbide network with eutectic carbides of less than (<) 5 % per volume;
and wherein the roll (1) exhibits:
- a hardness of between 780 HV to 840 HV; and
- internal compressive stresses between -300 to -500 MPa.

Further varieties of the roll comprising any of the following optional, individual or combinable aspects mentioned below.

A process according the invention wherein the ingot is manufactured maintaining a solidification rate in the working layer as well as in the core in the range of 15°C/min to 55°C /min, or alternatively 17°C /min - 50°C/min, or alternatively 35°C /min - 55°C/min, or alternatively 45°C /min - 55°C/min.

A process according the invention, wherein the ingot is manufactured maintaining a solidification rate higher than 35 °C/min in the working layer or surface of the ingot in the solidification interval.

A process according the invention wherein the solidification interval is between 1400-1200°C for said ingot.

A process according the invention, wherein the ingot is manufactured maintaining a pre-selected solidification rate in an electro-slag refining furnace (ESR) technique process by controlling the ampere current supply according to a predetermined function of the solidification rate.

A process, wherein the step of forging the ingot to a roll comprises the steps of:
a. Heating the ingot to a temperature of about 850 - 1100°C or between 800-1000°C preferably for a period of about 6 hours;
b. Forging the ingot at a temperature above about 800°C or above 850°C;
c. Repeating steps a-b until the ingot has been formed to a roll that has desired shape and size.

A process further, after the forging step, comprising a step of preliminary heat treatment, applied on the roll blank, preferably to a temperature of about 700-1100°C or between 800 - 900°C, which may include hydrogen diffusion treatment.

A process further comprising a step of superficial hardening by progressive induction heating , preferably at a temperature of about 900-1150°C.

A process wherein the step of tempering the roll comprises the steps of:
d. Heating the roll to about 450 - 530°C or between 450 - 520°C, preferably 3 times,
e. Air cooling the roll between the heating steps.

A process further comprising machining the roll to texturing a white layer comprising eutectic carbides.

A further aspect of the invention provides the use of a forged roll according to the invention for cold rolling material requiring a high rolling load.

Other embodiments of the invention provide the use of a forged roll for cold rolling of high strength materials like AHSS steel grades.

The use of a forged roll according to the invention for a selection of:
- cold rolling reduction mills for early and finishing stands, reversible and non-reversible stands for tinplate, sheet, silicon steel, stainless steel, aluminum and copper; or
- cold rolling temper and/or skin pass mills; or
- mill configurations as 2-High, 4-High and 6-High stands with textured or non textured surface.

The use of a forged roll according to the invention as a work roll.

The roll according to the invention is useful in many applications as a non-coated roll. However, in further aspects and embodiments of the invention, the roll may also be provided with a coating selected for any current or specific application. The coating may for example be a chromium coating. The roll may also be used in warm rolling applications.

### Brief description of the figures

The invention will be further described by means of exemplifying embodiments wherein:
Figure 1 shows a schematic picture of a roll according to the invention.
Figure 2 shows a schematic view of the roll production process according to the invention.
Figure 3 shows a schematic picture of an ingot according to the invention.
Figure 4 shows a manufacturing process of an ingot according to the invention.
Figure 5 A-B shows a cast microstructure of roll grade made using a production process according to the invention. The roll grade is shown in sectional view of the working layers of the roll grade.
Figure 6 A-B shows a cast microstructure of roll grade made using a production process according to the invention. The roll grade is shown in sectional view of the working layers of the roll grade.
Figure 7 shows cast microstructure of roll grade made using a production process according to the invention but with the deviation rendered when using too low solidification rate. The roll grade is shown in sectional view of the working layers of the roll grade.
Figure 8 shows a first set of examples of solidification rates for roll production process according to the invention.
Figure 9 shows a second set of examples of solidification rates for roll production process according to the invention.
Figure 10A-B show a cast microstructure of an ingot made in laboratory conditions when using the production process according to the invention.
Figure 11 A-B show a cast microstructure of an ingot made in laboratory conditions when using the production process according to the invention but with the deviation rendered when using too high Mo content.
Figure 12 shows a schematic view of forging according to the invention.
Figure 13 shows a schematic view of the steps of forming the ingot by forging it to a roll according to the invention.
Figure 14 shows a schematic view of progressive induction hardening with different frequencies of the roll according to the invention.
Figure 15 A-B shows a microstructure of the surface of a roll according to a standard grade after surface texturing (EDT texturing).
Figure 15 C-D shows a microstructure of the surface of a roll according to the invention after surface texturing (EDT texturing).

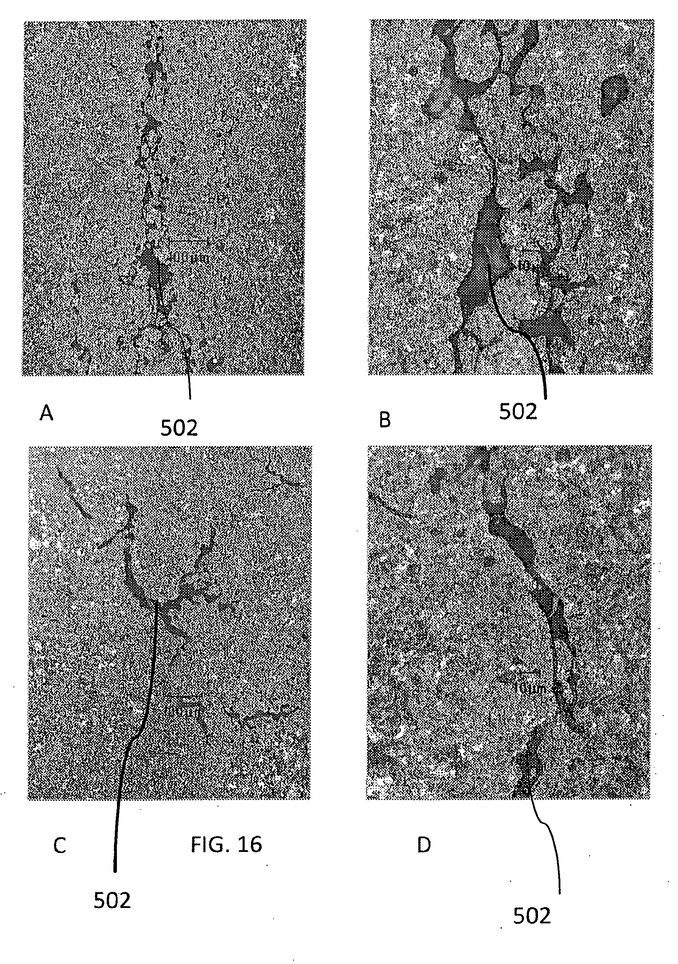

Figure 16 A-D shows detrimental defects on a roll generated during manufacturing of rolls with low chromium content and high molybdenum content.
Figure 17A shows an embodiment of a microstructure according to the invention with an open eutectic network.
Figure 17B shows an example of a microstructure with a closed eutectic network wherein the eutectic carbides 200 form a closed eutectic network with clearly separated eutectic cells 212.
Figure 18 shows an example representing the microstructure of a roll surface according to the invention after Electro Discharge Texturing.
Figure 19 shows the roll microstructure of a depth of 4mm on the roll surface after tempering and induction hardening of the roll.

### Detailed description

### Introduction

The invention relates generally to a forged roll 1 which preferably has a weight of more than 400 kg, or, as in embodiments for common applications for example a weight of more than 1000 kg. The roll according to the invention is produced according to a forged roll production method which in its general steps is per se known but is specifically adapted in accordance with the inventive concept to be able to produce a roll according to the invention.

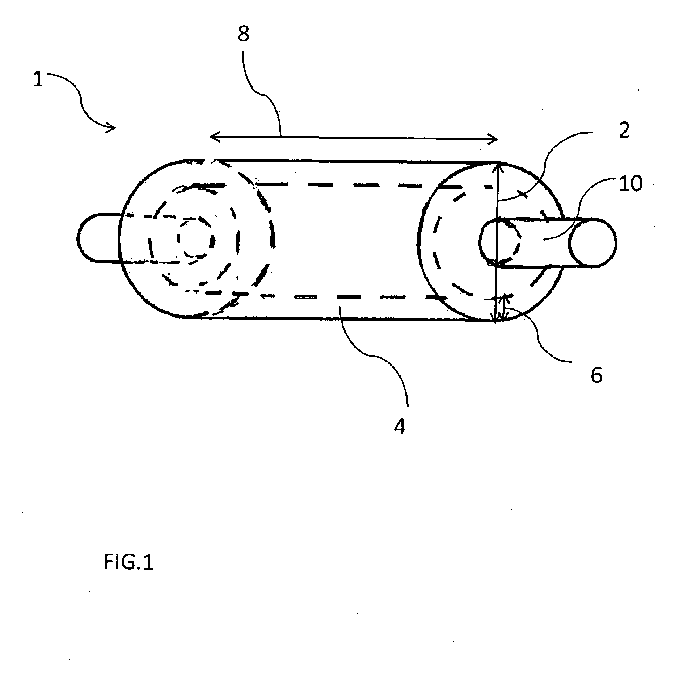

The invention is mainly directed to rolls with a weight between 400 kg and 10 000 kg. The roll according to the invention has a diameter 2 of typically more than 200 mm and, for example between 215-800 mm, and a length of the barrel 8 typically between 1-3 meters and a maximum length of typically about 6 meters including the necks 10. The roll 1 has a working layer 4 which corresponds to a part of the outer layer and is typically ranging between 20 mm and 120 mm in diameter, dependent on the application of the specific roll and/or dependent on the total roll diameter 2. Commonly, the outer 1/6 part 6 of the diameter 2 of the roll is referred to as the working layer 4 of the roll 1, see figure 1. The outer 1/6 part 6 of the diameter 2 of the ingot 34 is also referred to as the working layer 4 of the ingot 34 in the text.

There are special problems and challenges involved in making large forged rolls due to the internal stresses involved when forming these large pieces of rolls. A roll with a smaller diameter would not need the same treatment because then the internal stresses are lower and those rolls are not as prone to for example exploding during hardening.

The roll production process 12 according to the invention is crucial for manufacturing a roll 1 of this size according to the invention. The improved mechanical properties such as low residual internal stresses of the roll of the invention result from the roll production process 12. To achieve the low level of residual internal stresses of the resulting roll, the internal stresses induced by thermal gradient and allotropic transformations have to be minimized in all stages of the production processes through casting, forging, heat treatments and machining. The microstructure of the roll 1 according to the invention comprises tempered martensite with a retained austenite rate lower than 5% in volume due to the production process of the roll and due to the chemical composition according to the invention.

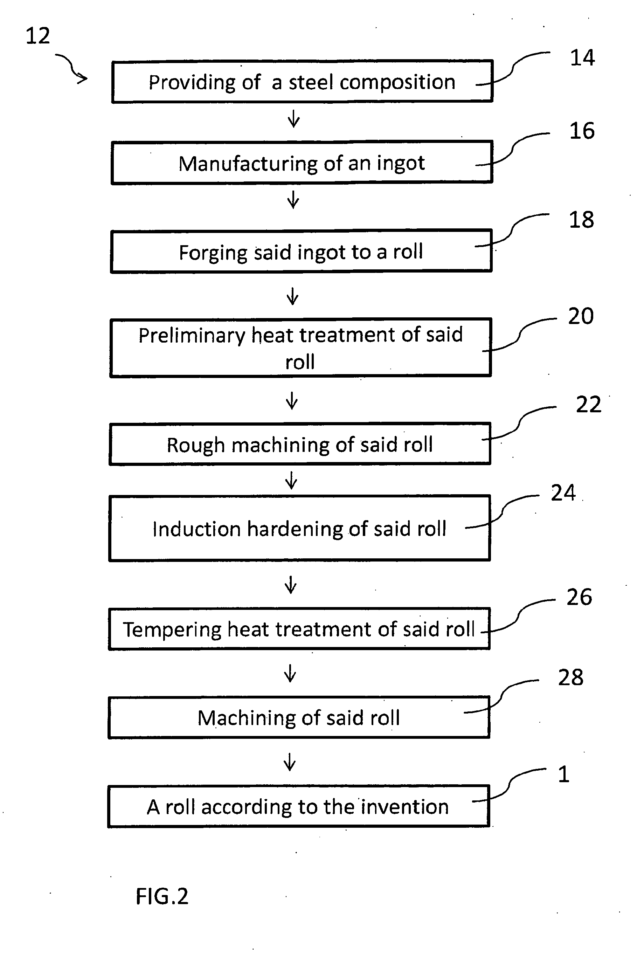

The roll production process according to the invention comprises a selection of the following basic steps schematically shown in the flow diagram of Fig 2:
14. Providing a steel composition
16. Manufacturing an ingot 34
18. Forging said ingot 34 to a roll 1
20. Preliminary heat treatment of said roll 1
22. Rough machining said roll 1
24. Induction hardening said roll 1
26. Tempering heat treatment of said roll 1
28. Machining said roll 1

Intermediate products are obtained after the respective steps. Specific control parameters as well as a chemical composition of the roll are selected to produce a roll according to the invention.

### Roll production process

The present invention relates to a forged roll (1) produced by a process comprising the steps of:
a. Providing a steel composition according to claim 1;
b. Manufacturing an ingot maintaining a solidification rate higher than 15°C/min in the working layer of the ingot in the solidification interval;
c. Forging the ingot to a roll;
d. Hardening the roll by induction heating;
e. Tempering the roll;
   thereby achieving a microstructure of the roll (1) that comprises:
   - tempered martensite with a retained austenite rate less than (<) 5 % per volume;
   and
   - an open eutectic carbide network with eutectic carbides of less than (<) 5 % per volume;
   and wherein the roll (1) exhibits:
   - a hardness of more than 780 HV; and
   - internal compressive stresses of less than -500 MPa in absolute values.

Wherein the provided chemical composition according to the invention used in combination with the described process steps according to the invention gives the roll according to the invention the desired properties in the microstructure of the roll according to the invention.

A process of making a forged roll according to the invention comprises the following steps:

### Step 14: Providing of a steel composition.

In one embodiment of the invention the steel composition comprises an alloy comprising or consisting of the following constituents indicated in weight % as listed in Table 1. In Table 1, the impact of the constituents and the effect of the inventive roll that is achieved by the selected constituents and the specific intervals are explained.

**Table 1**

| Chemical composit ion Elements | Alloy according to embodiments of the present invention - % weight. | Impact (effect) of interval according to the invention |
|---|---|---|
| C | 0.8 - 0.99 | Carbon is the most important and influential alloying element in steel. In addition to carbon however, any unalloyed steel will contain silicon, manganese, phosphorus and sulphur, which occur unintentionally during manufacture. The addition of further alloying elements to achieve special effects and intentional increase in the manganese and silicon contents results in alloy steel. With increasing C content, the strength and harden ability of the steel increase, but its ductility, forgeability, weldability and machinability (using cutting machine tools) are reduced. In the invention the level of C is lower than 1% to avoid the formation of too large closed network of eutectic carbides. |
| Mn | 0.2 - 0.5 | Manganese deoxidizes. It compounds with sulphur to form Mn sulphide, thus reducing the undesirable effect of the iron sulphide. This is of particular importance in free-cutting steel; it reduces the risk of red shortness. Mn very pronouncedly reduces the critical cooling rate, thus increasing hardenability. Yield point and strength are increased by addition of Mn and, in addition, Mn favourably affects forgeability and weldability and pronouncedly increases hardness penetration depth. In the invention Mn is kept lower to 0.5% to avoid excessive brittleness. |
| Si | 0.2 -2.0 | Silicon is contained in all steel in the same way as manganese, as iron ores incorporate a quantity of it according to their composition. In steel production itself, silicon is absorbed into the melt from the refractory furnace linings. But only those steels are called silicon steels which have Si content of> 0.40%. Si is not a metal, but a metalloid as are also, for example, phosphorus and sulphur. Si deoxidizes. On account of significant reduction of electrical conductivity, coercive field intensity and low wattage loss, Si is used in steels for electrical quality sheet. Accordingly, in the invention, too high level of Si influences the Eddy Current response during the roll inspection leading to possible untrue reading and must be kept under 1.5% |
| S | < 0.015 | Sulphur produces the most pronounced segregation of all steel accompanying elements. Iron sulphide, leads to red shortness or hot shortness, as the low melting point sulphide eutectics surround the grains in reticular fashion, so that only slight cohesion of the latter occurs and during hot forming the grain boundaries tend to break down. This is further increased by the action of oxygen. As sulphur possesses a considerable affinity for manganese, it is combined in the form of Mn sulphide, as this is the least dangerous of all existing inclusions, being present distributed in point form in the steel. Toughness in transverse direction is reduced significantly by S. To be kept at the lowest level. |
| P | < 0.015 | Phosphorus is usually regarded as a steel parasite, as P produces pronounced primary segregation on solidification of the melt and the possibility of secondary segregation in solid state due to the pronounced restriction of the gamma phase. As a result of the relatively low rate of diffusion, both in the alpha- and in the gamma crystal, segregation which has occurred can only be corrected with difficulty. In accordance with the invention, P is to be kept at the lowest level, preferably <0.015 W%. |
| Cr | 7.0 - 13.0 | Chromium renders steels oil and air-hardenable. By reduction of the critical rate of cooling necessary for martensite formation, it increases hardenability, thus improving its susceptibility to hardening and tempering. Notch toughness is reduced however, but ductility suffers only very slightly. The tensile strength of the steel increases by 80-100 N/mm² per 1 % Cr. Cr is carbide former. Its carbides increase the cutting ability and wear resistance. High temperature strength property is promoted by chromium. The element restricts the gamma phase and thus extends the ferrite range. |
| | | With a Cr content higher than 13%, extended eutectic carbides tend to be formed. With a Cr content lower than 7%, the level of hardness remains too low for cold rolling application due to a deficit in secondary hardening mechanisms. |
| Mo | 0.6 -1.6 | Molybdenum is usually alloyed together with other elements. Reducing the critical cooling rate improves hardenability. Mo significantly reduces temper brittleness and promotes fine grain formation. Increase in yield point and strength. Pronounced carbide former; cutting properties with high speed steel are improved thereby. Very severe restriction of the gamma phase. Increased high temperature strength. With increased Mo content, forgeability is reduced. Accordingly, its content is maintained under 1,6% to avoid the detrimental formation of ferrite delta. |
| Ni | <1.0 | Nickel in steel produces significant increase in notch toughness, even in the low temperature range, and is therefore alloyed for increasing toughness in case-hardening, heat-treatable and subzero toughness steels. Ni is not carbide former. |
| V | >1-3 | Vanadium refines the primary grain and thus the casting structure. Pronounced carbide former, thus providing level of hardness compatible with cold rolling process, increase in wear resistance, high cutting ability and high temperature strength. It is used therefore primarily as additional alloying element in high speed, hot forming and creep resistant steels. Significant improvement in retention of temper, reduction of overheating sensitivity. V restricts the gamma phase and shifts the Curie point at elevated temperatures. |
| | | With a V content lower than 1%, the level of hardness remains to low regarding cold rolling process. With a V content higher than 3%, the steel grindability becomes prohibitive for cold rolling process. |
| W | 0.0 - 2.0 | Tungsten is a very pronounced carbide former (its carbides are very hard) and restricts the gamma phase. It improves toughness and prevents grain growth. W increases high temperature strength and retention of temper as well as wear resistance at high temperatures (red heat) and thus cutting ability. It is therefore alloyed primarily to high speed and hot forming tool steels, as well as creep-resistant steel types and to ultrahard steels. |
| Ti | 0.0 - 1.0 | Titaniumn account of its very strong affinity for oxygen, nitrogen, sulphur and carbon, Ti has a pronounced deoxidizing, pronounced denitriding and pronounced carbide forming action. Used widely as carbide former. Also possesses grain refining properties. Ti restricts the gamma phase very pronouncedly. In high concentration, it leads to precipitation processes and is added to permanent magnet alloys on account of achieving high coercive field intensity. Ti increases creep rupture strength through formation of special nitrides. Finally, Ti tends pronouncedly to segregation and banding. |
| Nb | 0.0 - 0.5 | Niobium (Nb) and Tantalum (Ta) occur almost |
| Ta | 0-0-0.5 | exclusively together and are very difficult to separate from one another, so that they are usually used together. Very pronounced carbide formers, thus alloyed particularly as stabilizers of chemical resistant steels. Both elements are ferrite formers and thus reduce the gamma phase. On account of the increase in high temperature strength and creep rupture strength due to Nb. |
| Zr | 0.0 - 0.5 | Zirconium is a carbide former; metallurgical use as alloying element for deoxidation, denitriding and desulphurization, as it leaves minimal deoxidation products behind. Additions of Zr to fully deoxidized sulphur-bearing free-cutting steels have a favourable effect on sulphide formation and thus prevention of red shortness. It increases the life of heating conductor materials and produces restriction of the gamma phase. |

and further optionally comprising, H₂, N₂, O₂, Al, Cu, each in amounts lower than 0.4 weight %; and wherein the remaining portion of the steel composition is substantially Fe, apart from incidental elements and possibly unavoidable impurities.

In an embodiment of the invention the steel composition comprises, in terms of % per weight,
0.8 to less than (<) 1 % C,
0.2 to 0.5 % Mn,
0.2 to 2.0 % Si,
7.0 to 13.0 % Cr,
0.6 to 1.6 % Mo,
more than (>) 1.0 to 3.0 % V,
wherein the remaining portion of the steel is substantially Fe, apart from unavoidable impurities.

A roll with a steel composition consisting, in terms of % per weight;
0.8 to less than (<) 1 % C,
0.2 to 0.5 % Mn,
0.2 to 2.0 % Si,
7.0 to 13.0 % Cr,
0.6 to 1.6 % Mo,
more than (>) 1.0 to 3.0 % V,
less than (<) 0.015 % P, and
less than (<) 0.015 % S, and
less than (<) 1 %Ni
less than 30 ppm O₂, and
less than (<) 100 ppm N₂, and
less than (<) 3 ppm H2
less than (<) 2 % W, and
less than (<) 1 % Nb, and
less than (<) 1 % Ti, and
less than (<) 0.5 % Ta, and
less than (<) 0.5% Zr,
the remaining portion of the steel being substantially Fe and unavoidable impurities;
The roll according to the invention, wherein the C content in the steel composition is between 0.8 - 0.99 % C in terms of % per weight of total roll weight.
The roll according to the invention, wherein the C content in the steel composition is between 0.85 - 0.9 % C in terms of % per weight of total roll weight.
The roll according to the invention, wherein the Mn content in the steel composition is between 0.4 - 0.5 % Mn in terms of % per weight of total roll weight.
The roll according to the invention, wherein the Si content in the steel composition is between 0.2 -1.5 % Si in terms of % per weight of total roll weight.
The roll according to the invention, wherein the Si content in the steel composition is between 0.85 -1.15 % Si in terms of % per weight of total roll weight.
The roll according to the invention, wherein the Cr content in the steel composition is between 7.0 - 11 % Cr in terms of % per weight of total roll weight.
The roll according to the invention, wherein the Cr content in the steel composition is between 7.3 - less than (<) 8.0 % Cr in terms of % per weight of total roll weight.
The roll according to the invention, wherein the Mo content in the steel composition is between 1.45 - 1.55 % Mo in terms of % per weight of total roll weight.
The roll according to the invention, wherein the Ni content in the steel composition is less than (<) 0.3 Ni in terms of % per weight of total roll weight.
The roll according to the invention, wherein the V content in the steel composition is between 1.3 - 2.1 % V in terms of % per weight of total roll weight.
The roll according to the invention, wherein the V content in the steel composition is between 1.3 -1_{.}6 % V in terms of % per weight of total roll weight.

A roll according to the invention, wherein the steel composition consists, in terms of % per weight:
0.8 - 0.99 % C, and
0.4 - 0.5 % Mn, and
0.2 -1.5 % Si, and
7.0 - 11 % Cr, and
0.6 -1.6 % Mo, and
less than (<) 1.0 Ni, and
1.0 - 2,1 % V, and
less than (<) 0_{.}015 % P, and
less than (<) 0.015 % S, and
less than 30 ppm O2, and
less than (<) 100 ppm N2, and
less than (<) 3 ppm H2, and
the remaining portion of the roll being substantially Fe and possible incidental and/or possibly unavoidable impurities.

A roll according to the invention, wherein the steel composition consists, in terms of % per weight:
0.85 - 0.9 % C, and
0.4 - 0.5 % Mn, and
0.85 - 1.15 % Si, and
7.3 - less than (<) 8.0 % Cr, and
1.45 - 1.55 % Mo, and
less than (<) 0.3 Ni, and
1.3 - 1.6 % V and
less than (<) 0.015 % P, and
less than (<) 0.015 % S, and
less than 30 ppm O2, and
less than (<) 100 ppm N2, and
less than (<) 3 ppm H2, and
the remaining portion-of the roll being substantially Fe and possible incidental and/or possibly unavoidable impurities.

### Step 16: Manufacturing 16 of a cylindrical shaped ingot 34

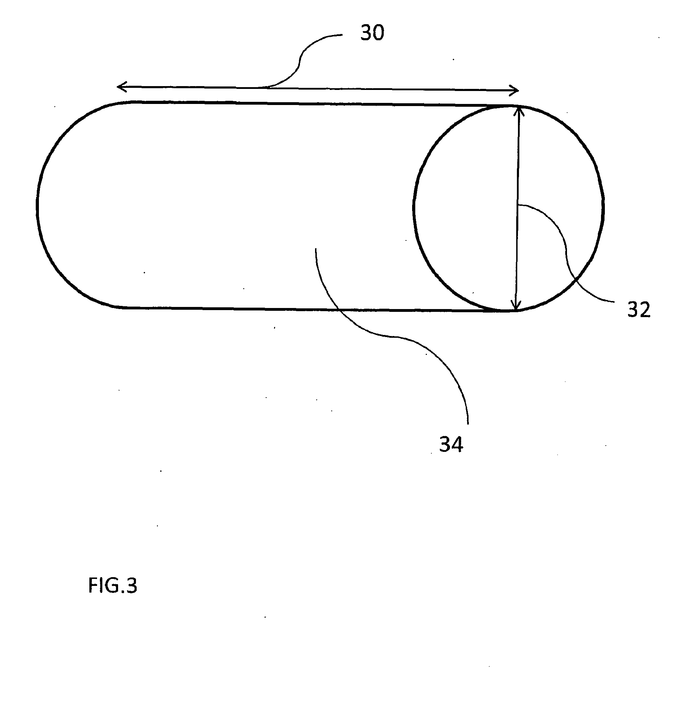

In a typical application of the invention, an intermediate product, the ingot 34 produced according to the method of the invention preferably has a diameter 32 of between 450 and 1100 mm, length 30 up to 6 meters and weight between 400 to 30000kg, see figure 3. The method of making an ingot 34 according to the invention involves using a technique which enables fast cooling during the ingot 34 manufacturing. For example the ingot 34 can be produced using different ingot forming techniques. Suitable manufacturing techniques are those which are capable of being controlled to achieve and maintain a specific minimum solidification rate.

According to embodiments of the invention the average solidification rate is controlled to be higher than 15°C/min in the surface and preferably also higher than 10°C/min in the core during the formation of the ingot. Preferably, this solidification rate is maintained while controlling cooling the ingot material in the solidification interval which may for example be between 1400°C to 1200°C. In other embodiments of the invention the average solidification rate is controlled to be higher than 35°C /min in the working layer in the solidification interval.

From a practical point of view it is generally difficult to achieve very high solidification rates when implementing the invention. Further embodiments of the invention comprise the average solidification rate in the working layer as well as in the core is controlled to be in the range of 15°C/min to 55°C /min, or alternatively 35°C /min - 55°C/min, or alternatively 45 °C /min - 55°C/min.

Techniques which are used in the invention to control the process with regard to solidification parameters in accordance with the invention are for example different types of electro-slag refining furnace (ESR), for example moving mold ESR melting or ESR cladding or spray forming techniques etc.

An ingot made using a solidification rate and a chemical composition as described in any of the above embodiments according to the invention has the following characteristics:
- Very fine dendritic macrostructure.
- Uniformity of chemistry.
- Lack of macro segregations and dark veining in the intermediate layers.
- No minor segregations.

Further, an ingot made using a process according to the invention has the following advantages on the rolled product:
- Elimination of "orange peel" effect (it consists of the appearance of the dendrite patterns due to the difference of wear of the interdendritic area).
- No pinhole problems.
- Very bright surface finish.
- Homogeneity of the texture obtained by texturing.
- Absence of marks related to the heterogeneity of the structure.

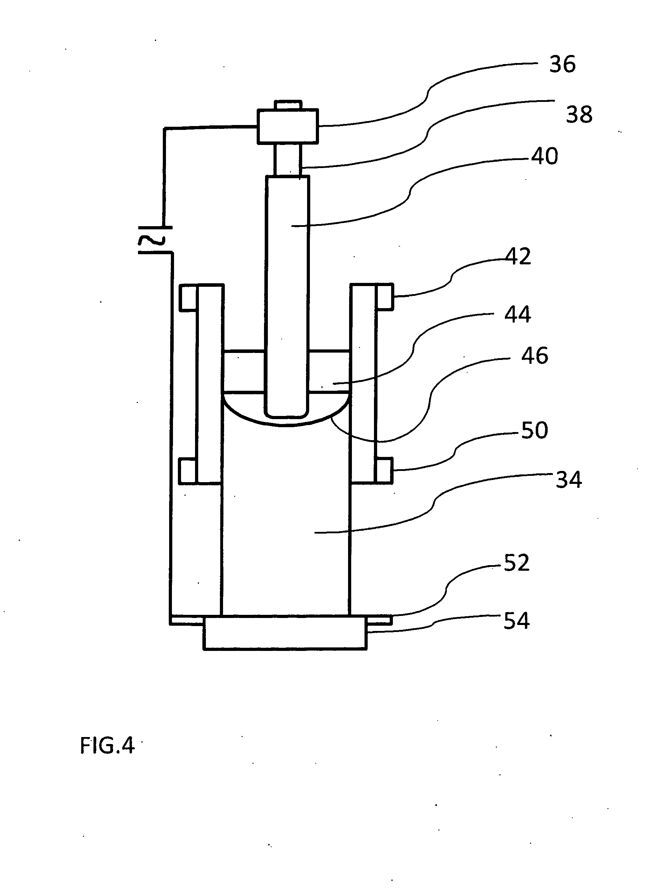

In one embodiment of the invention an electro-slag refining furnace (ESR) is used for manufacturing of the ingot 34 according to the invention, for a schematic view see figure 4. The electro-slag refining furnace (ESR) is capable of melting about 300-1100kg/h, and comprises an electrode clamp 36, a stinger 38, an electrode 40, a cooling jacket outlet 42, a cooling jacket inlet 50 for cooling water. In the ESR, the ingot is formed by melting the electrode 40 and thus different layers are formed in the ingot material 48 such as a slag pool 44, which is located near the electrode, and a molten metal pool 46.

The ESR also comprises a starting plate 52 which is water cooled 54, see figure 4. The ESR technique may require a starting ingot (electrode 40) obtained by a conventional melting process to be re-melted to form an ingot 48 according to the invention. The re-melting using the ESR is carefully controlled in order to achieve the average solidification rate according to embodiments of the invention, for example an average solidification rate higher than 15°C/min in the working layer and also in the core of the ingot during formation of the ingot.

The electrode 40 is in the ESR process thus heated by an electric current, for example a high ampere current to re-melt the steel of the electrode to form an ingot according to the invention. The high ampere current of the electrode 40 is carefully controlled to control the speed of re-melting and this also affects the speed of cooling and thereby the solidification rate. The solidification rate depends on the ampere current fed to the electrode according to a predetermined function. Basically, the higher the ampere current, the higher is the power supplied to re-melt the electrode 40 (see Ohm law). The higher the supplied power, higher is the slag temperature and the lower is the solidification rate.

By maintaining the correct re-melting rate and slag temperature, directional solidification can be achieved with a solidification rate according to the invention in the core and in the working layer while cooling the ingot in certain intervals. For example, in one embodiment a solidification rate which in average is higher than 15°C/min both in the core and in the working layer of the ingot while cooling the ingot in the solidification interval from 1400°C to 1200°C.

According to the invention and as a consequence of the combination of the steel composition and the process of the inventive concept, the eutectic carbide content in the ingot is held below 5 volume %. This renders a good grindability of the resulting roll. The grindability of the roll is important since during usage of the final roll, grinding is an important procedure to achieve the adequate roughness of the roll regarding cold rolling process. It is known that a concentration of eutectic carbides higher than 5% gives unsatisfactory grindability of such a roll.

Moreover, another effect of the low eutectic carbide content is a low tendency of the roll to form dust during operation in the mill. In contrast, dust forming can be generated in rolls having high concentrations of carbides, which is negative for the rolled products as well as the working environment in the mill.

It is especially important to control the solidification rate when making ingot from compositions which comprises high levels of Cr (for example 7-13%). High segregation which is obtained if the solidification. rate is too slow defects high chromium ingots.

A solidification rate higher than 15°C/min during the solidification interval when making the ingot gives a low segregation rate resulting in an eutectic carbide content lower than 5% in volume.

The present invention will be understood more readily by reference to the following examples. However, these examples are intended to illustrate embodiment variants of the ingot forming step of the invention and are not to be construed to limit the scope of the invention.

### Comparative examples

Example 1 demonstrates the effect the method of the invention has on the microstructure of the roll 1 according to the invention. Example 2 is a comparative example. The examples are performed during production of roll prototypes in natural scale. The experiments show the important variation of the distribution of eutectic carbides and network shape in the ingot after casting depending on the used solidification rate, see examples and 2 below and table 2. The distribution of eutectic carbides and network shape which is seen in the ingot is remained in the final roll after forging and tempering according to the invention.

### Example 1

This example shows the effect on the microstructure in the roll according to the invention when using a solidification rate higher than 15°C/min during formation of the ingot 34 according to the invention.

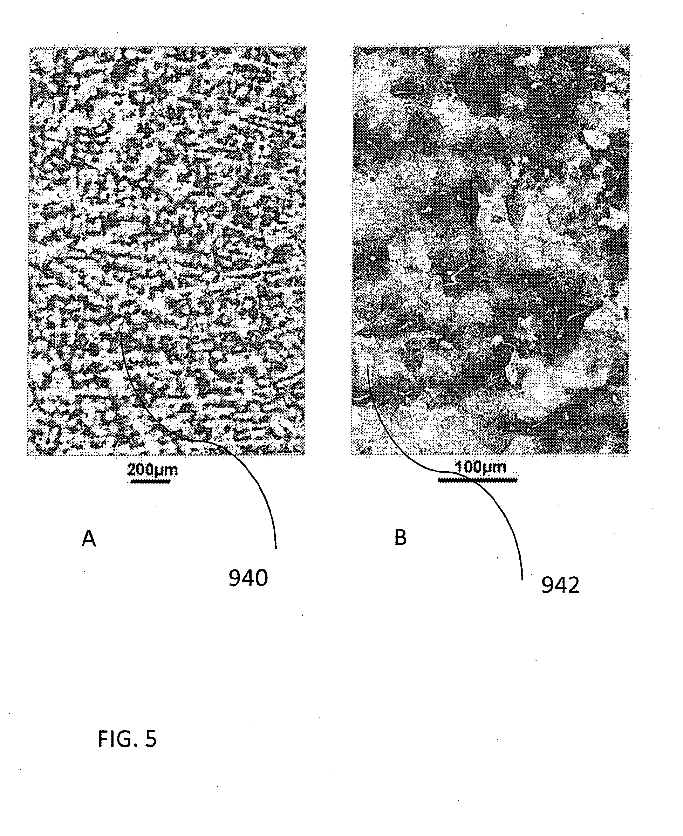

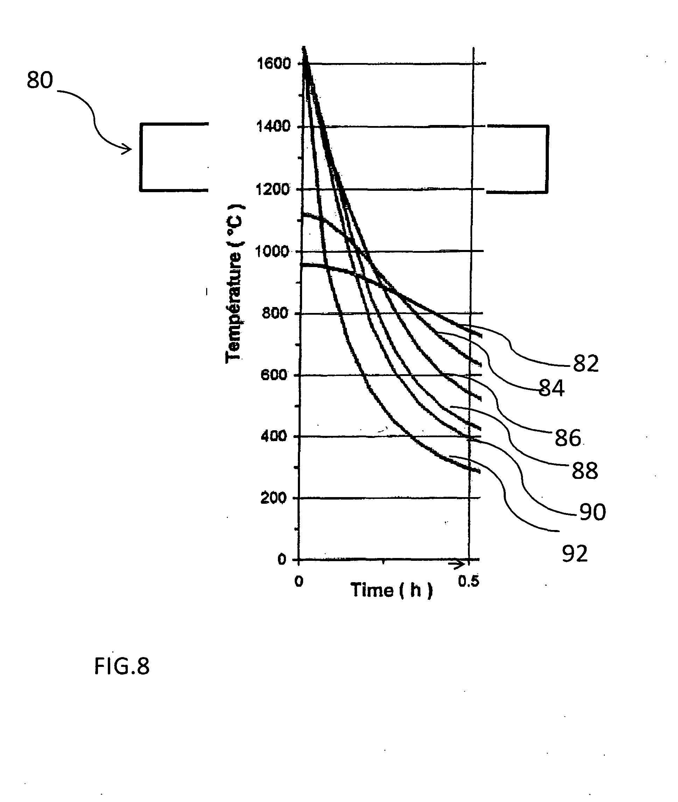

Figure 5A-B show an example of a microstructure of INGOT 1 according to the invention which is made using a process with a solidification rate in average 50°C/min (on 90mm depth of the ingot) while cooling the ingot from 1400°C to 1200°C. The eutectic cells in the example INGOT 1 according to the invention are small (940, 942), figure 5B shows the fragmented network with to an open eutectic network. See also figure 8 for the different solidification intervals in the different parts of the ingot during the solidification showing the temperature rate in the core 82, the mid-radius 84, 90mm 86, 50mm 88, 30mm 90 and surface 92. Figure 5B is a magnification of figure 5A. See also table 2.

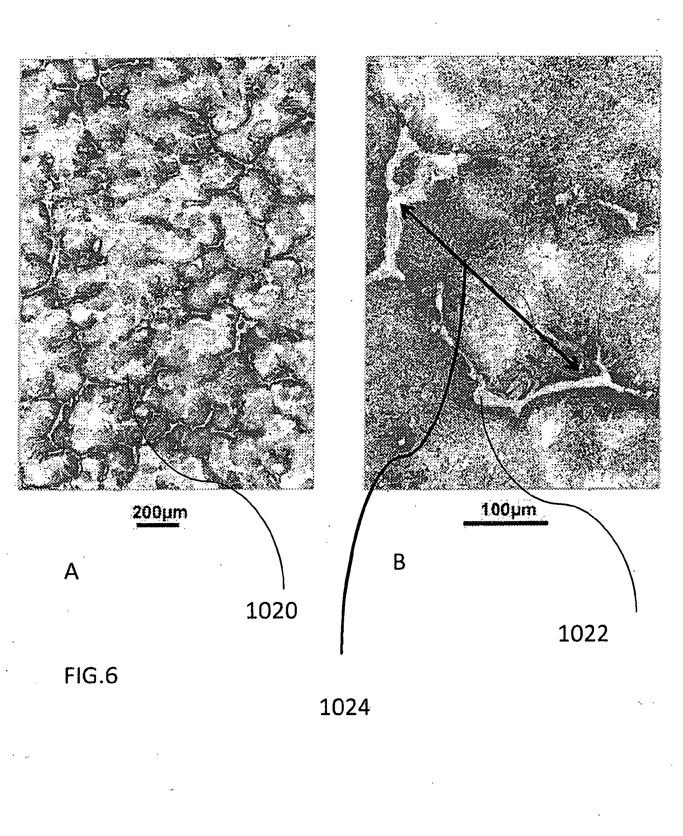

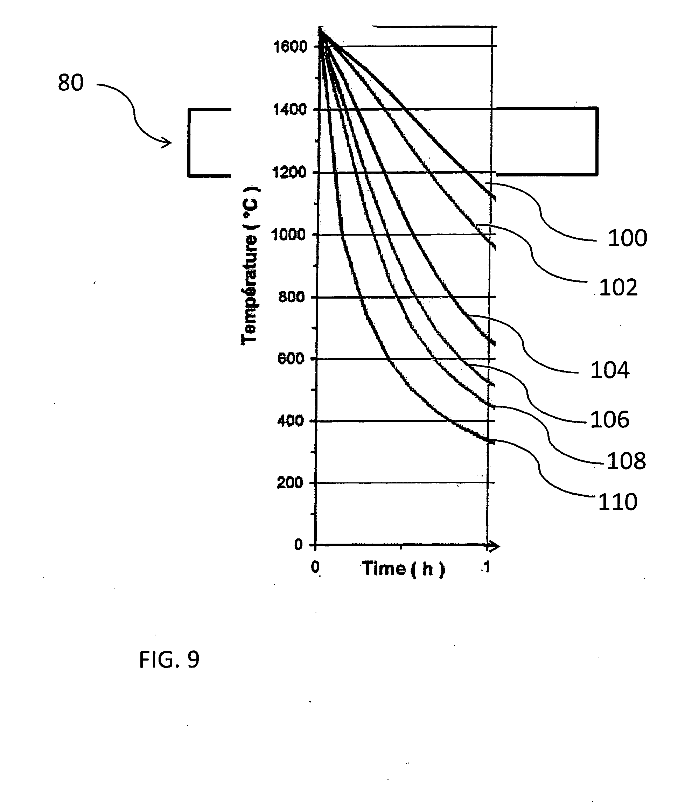

Figure 6A-B show an example of a microstructure of INGOT 2 according to the invention which is made using a process with a solidification rate in average 18°C/min (on 90mm depth of the ingot) while cooling the ingot from 1400°C to 1200°C. Figure 6 shows the eutectic cells in the example INGOT 2 according to the invention, and these are small, see for examplecross sectional distance 1024. See also figure 9 for the different solidification intervals in the different parts of the ingot during the solidification 80, showing the temperature rate in the core 100, the mid-radius 102, 90mm 104, 50mm 106, 30mm 108 an surface 110. Figure 6B is a magnification of figure 6A. See also table 2.

### Conclusion

The method according to the invention ensures absence of segregation in mid-radius of the ingot. Absence of segregation in mid-radius (or 5/6 of inner part of the diameter of the cylindrical roll) guarantees the integrity of the roll during the hardening process. A solidification rate higher than 15°C/min in the working layers thus generates a finger. microstructure which, as explained above, is better in terms of grinding and dust pollution, se figures 5A-B and figure 6A-B.

### Example 2

This example shows the effect of using a solidification rate lower than 15°C/min during formation of the TEST 1 ingot.

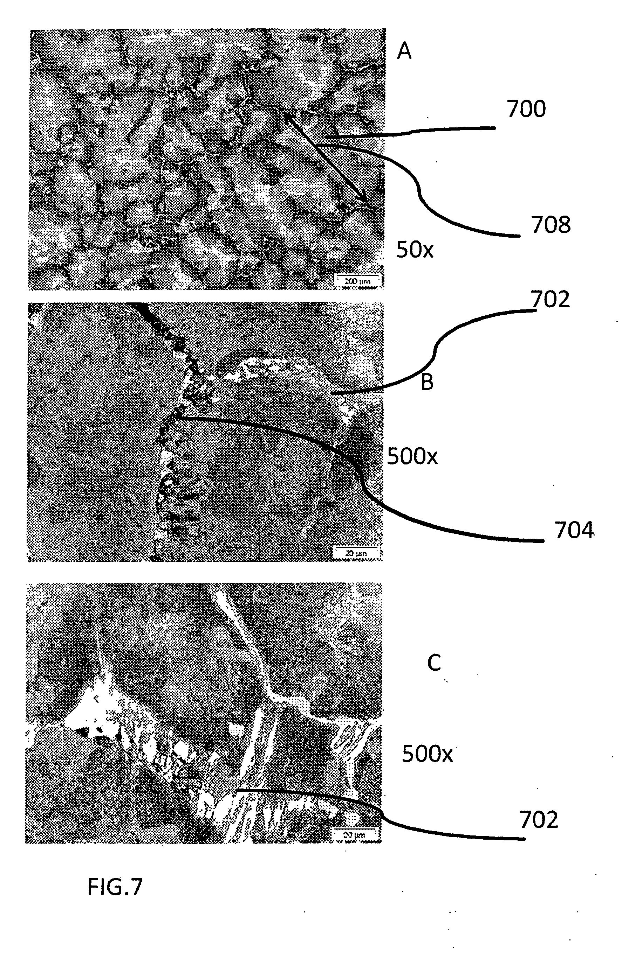

Figure 7A-C show an example of a microstructure of the TEST1 ingot which is made using a process with a solidification rate of lower than 15 (in fact even lower than 10)°C/min while cooling the ingot in the solidification interval from 1400°C to 1200°C. The cells 700 of the comparative TEST 1 ingot in figure 7A-C are larger in size, see for example cross section 708 which has a cross sectional length 708 is larger than the largest cross section in for example of the INGOT 1 in example 1 according to the invention. TEST 1 ingot also shows shrinkage porosities 704. The coarse conglomerate eutectic network 702 can also be seen in figure 7A-C. See also table 2. Figure 7B-C is a magnification of figure 7A.

### Conclusion:

A solidification rate lower than 15°C/min within the solidification interval gives a high segregation of the carbides and a coarse carbide network 702 the mid-radius of the TEST 1 ingot structure and also porosities 704, see figure 7A-C. A high segregation of the carbides and a coarse carbide network makes a white blank roll or a finished roll made by an ingot according to TEST 1 brittle and thus prone to explode during induction hardening (a white blank roll) or in the cold rolling mill (finished roll).

Example 2 also shows that a solidification rate lower than 15°C/min also makes the size of the eutectic cell structure larger and coarser compared to when an ingot is made using solidification rates higher than 15°C/min as according to the invention.

A solidification rate higher than 15°C/min during the solidification interval when making the ingot gives a low segregation rate resulting in an eutectic carbide content lower than 5% in volume.

**Table 2**

| | **Average solidification rate^{*}** | **C** | **Mn** | **Si** | **Cr** | **Mo** | **Ni** | **V** | **Effect on segregation** /eutectic carbide formation | **Effect on micro-structure** |
|---|---|---|---|---|---|---|---|---|---|---|
| INGOT 1 | 50°C/min | 0. 8 | 0.5 | 1.0 | 7.2 | 1.4 | <1 | 1.8 | Low segregation rate+ control on eutectic carbides | See figure 5A-B |
| INGOT2 | 18°C/min | 0. 8 | 0.5 | 1.0 | 7.2 | 1.4 | <1 | 1.8 | Low segregation rate+ control on eutectic carbides | See figure 6A-B |
| TEST 1 | <15°C/min | 0. 8 | 0.5 | 1.0 | 7.2 | 1.4 | <1 | 1.8 | High segregation rate -No control on eutectic carbides | See figure 7A-C |

| | | | | | | | | | | |
|---|---|---|---|---|---|---|---|---|---|---|
| Table 2 shows experimental data for test of ingots with different average solidification rate (*) while cooling the ingot from 1400°C to 1200°C on 90mm depth of the ingot. | | | | | | | | | | |

### Comparative examples

Example 3 demonstrate for example the effect the method of the invention and the chemical composition of the ingot has on the microstructure of the ingot and thus also on the roll of the invention. Example 4 is a comparative example. Example 3 and 4 show microstructure of ingots produced by experimentation in the laboratory with controlled solidification device and controlled cooling speeds.

The shape of the eutectic carbide network in the ingot is affected depending of the used chemical composition, see also table 3..

### Example 3

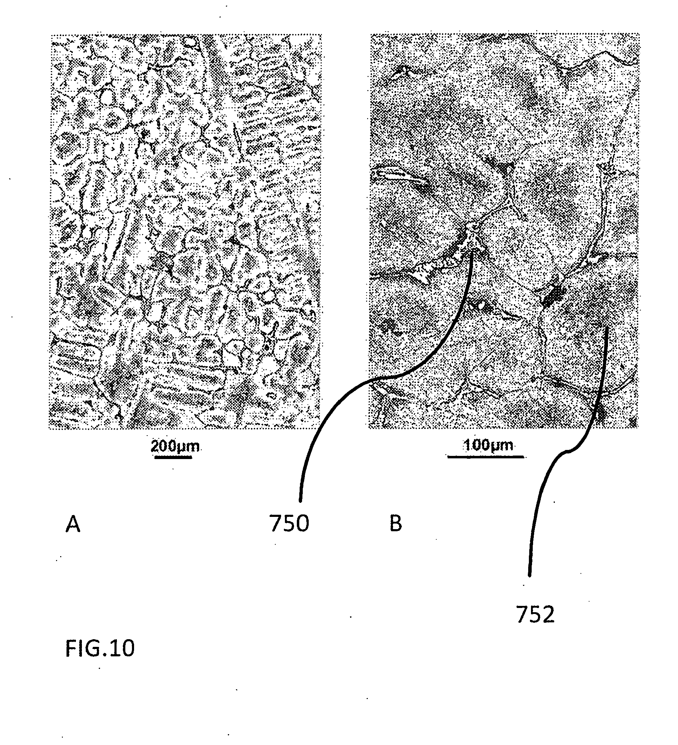

This example shows an INGOT 1 microstructure produced according to the method of the invention by experimentation in the laboratory with controlled solidification device and controlled cooling speeds higher than 15°C/min in the solidification interval. When a chemical composition comprising Mo in 1,4 % is used according to the invention, an open eutectic carbide system 750 is achieved in the ingot structure, see figure 10A-B. See also table 3. This open eutectic carbide system 750 as is seen in the roll 1 according to the invention is characterized as a dendrite pattern and the eutectic carbide structures 752 is not forming closed eutectic carbides network(as in comparative example 4, TEST2) but instead forms dendrite arms in a network, see figure 10A-B which shows a picture of the microstructure of an ingot with 1.4% Mo is produced according to the process of the invention. This open eutectic carbide system according to the invention makes the roll easier to grind compared to rolls made using higher amounts than 1.6% of Mo.

### Example 4.

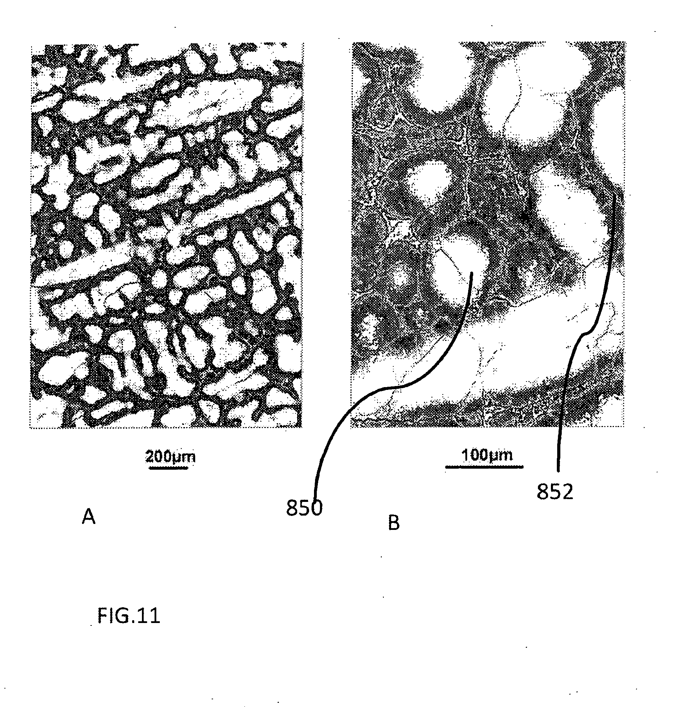

A TEST2 ingot is made using a process of the invention and a composition where the main constituents are according to the above embodiments but with the difference that the chemical composition differs from the invention regarding the amount of Mo. This TEST2 ingot is produced according to the method of the invention by experimentation in the laboratory with controlled solidification device and controlled cooling speeds higher than 15°C/min in the solidification interval. In TEST2 the amount of Mo is 2.77%, see also table 3. Using a chemical composition comprising Mo of 2.77% in the process of the invention producing an ingot makes the eutectic carbide system of the ingot shaped in a cell of closed eutectic carbides, see figure 11 A-B, and the eutectic carbides 852 forms substantially isolated portions 850, like islands or segregated cell structures in figure 11A-B showing the microstructure of TEST2. The white areas in figure 11A-B represent a matrix; mainly iron, the black is secondary carbides.

The excessive addition of alloying elements in TEST2 leads to the formation of a coarse carbides network linked to segregation of carbides. See also table 3.

**Table 3**

| | **Average solidification rate *** | **C** | **Mn** | **Si** | **Cr** | **Mo** | **Ni** | **V** | **Effect on micro-structure** |
|---|---|---|---|---|---|---|---|---|---|
| TEST2 | 18°C/min | 0.8 | 0.6 | 1.11 | 7.19 | 2.77 | <1 | 0.44 | Figure 11 A-B. Shows a closed eutectic carbide network |
| INGOT 1 | 18°C/min | 0.8 | 0.5 | 1.0 | 7.2 | 1.4 | <1 | 1.8 | Figure10 A-B. Shows an open eutectic carbide network. |

Table 3 shows experimental data for test of ingots with different average solidification rate (*) while cooling the ingot from 1400°C to 1200°C. The constituents other than Mo are within the intervals as described above.

### Step 18: Forging said ingot 34 to a roll

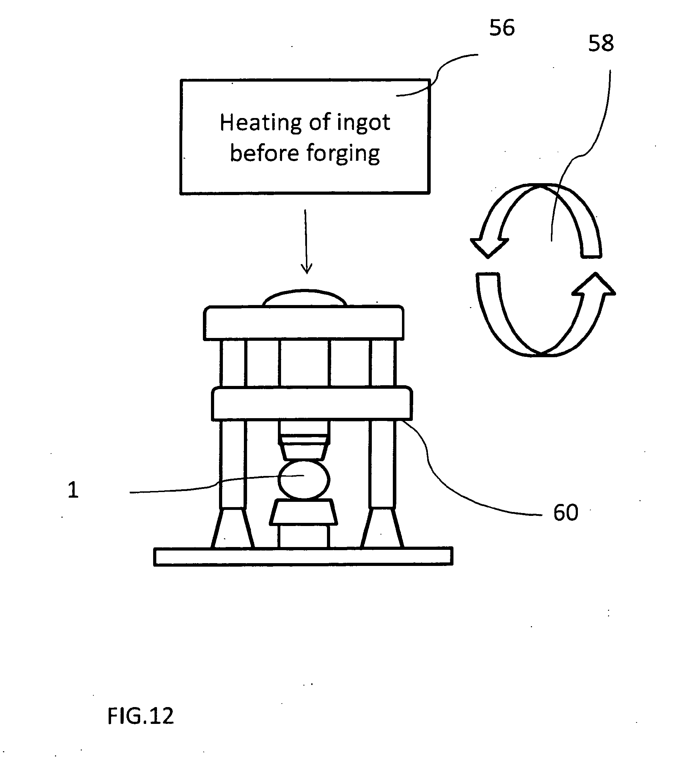

In a typical application of the invention, the ingot 34 made according to the previous step of the invention is then forged. In one embodiment of the invention the ingot 34 is hot press forged using a a per se known process for simultaneously reducing the cross-sectional area and changing the shape by passing them between a hammer and an anvil forming the ingot to a roll 1 according to the invention. The ingot is heated in a dedicated furnace, see figure 12 for a schematic view of the forging step.

The forging step 18 according to the invention includes the following steps, see figure 12; -Pre-heating 56 of the ingot 34 for about 6h to a temperature of between 800-1200°C or between 850-1100 °C. The pre-heating step 56 involves heating the ingot 34 from the surface all the way into the core of the ingot. The temperature during forging is adjusted within the interval 800-1200°C or between 850-1100 °C since a higher temperature than 1200°C leads to defects of the ingot structure due to burning of the roll. The reasons for keeping the temperature of the ingot at the indicated temperature interval is that a temperature below 800°C leads to crack forming of the ingot. As the ingot 34 cools it becomes stronger and less ductile which may induce cracking if deformation continues.

After preheating (step 56) of the ingot 1, it is forged (step 60) using a forge ratio of 1.35-2.0. The forging step 60 and the preheating step 56 are repeated, this forging cycle commonly being called a heat 58. A heat 58 is repeated as many times as needed to form a roll according to the invention, see figure 12.

In one embodiment the roll 1 according to the invention is forged using 3-6 heats 58 to forge the ingot into a roll blank. A roll blank is a roll which has the shape of a roll but still with a barrel that lacks the final treatments to become a roll usable in the mill.

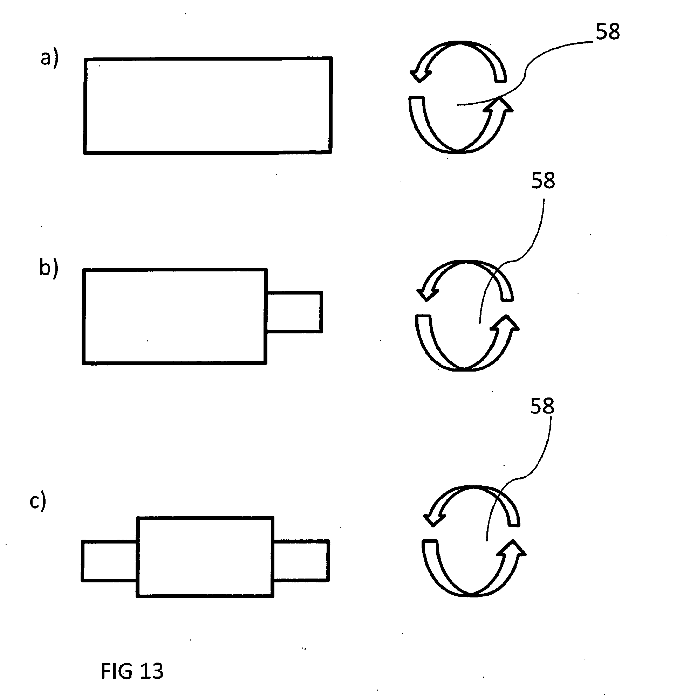

In another embodiment the ingot 34 is forged in several heats 58, see figure 13 for a schematic view of forging a roll:
a) first, the ingot 34 adjusted in cross-sectional area in a few or 1-2 heats 58,
b) one neck of the roll is made in one heat,
c) the other neck of the roll is forged in the next heat.

Forging a steel composition according to the invention is more difficult to do because of the high alloy content according to the invention than compared to forging example standard steel grades.

During forging, the diameter 32 of the ingot 34 is reduced by 30-50% while forged into a roll 1 according to the invention. For example a roll 1 according to the invention has preferably a diameter 2 between 250-800 mm, see figure 1 and an ingot 34 according to the invention has preferably a diameter 32 between 400-1000mm or between 450-1100 mm.

It is important that the ingot 34 has the desired eutectic carbide microstructure formed during the manufacturing process of the ingot 34 during the solidification step 80. It is shown that ingots 34 with the eutectic carbide microstructure according to the invention with amounts of eutectic carbides lower than 5 volume % are possible to forge using hot pressure forging techniques. Using an ingot with formed with another process, for example with a solidification rate lower than 15°C/min makes these large rolls to lead to explosion during induction hardening or in the mill.

### Step 20: Preliminary heat treatment of said roll

In the manufacturing process of the invention the roll is treated with a preliminary heat treatment step. In one embodiment of the invention, the roll is heated to between 700°C - 1100°C during the preliminary heat treatment 20 according to the invention in a furnace and then the roll is kept at that temperature for a certain time until satisfactory hydrogen diffusion has occurred. The preliminary heat treatment (normalizing and spheroidal annealing) is performed in order to improve machinability of the roll.

### Step 22: Rough machining 22 of said roll

In the manufacturing process of the invention the roll is treated by a rough machining step 22. Rough machining 22 of the formed roll 1 according to the invention means removing the outer layer of the forged roll. In one embodiment of the invention of the outer layer is removed during rough machining. The roll is called a black blank before it is treated to rough machining. By removing the oxidation layer on the surface of the roll the black blank roll is then transformed to a white blank.

### Step 24: Induction hardening of said roll 1

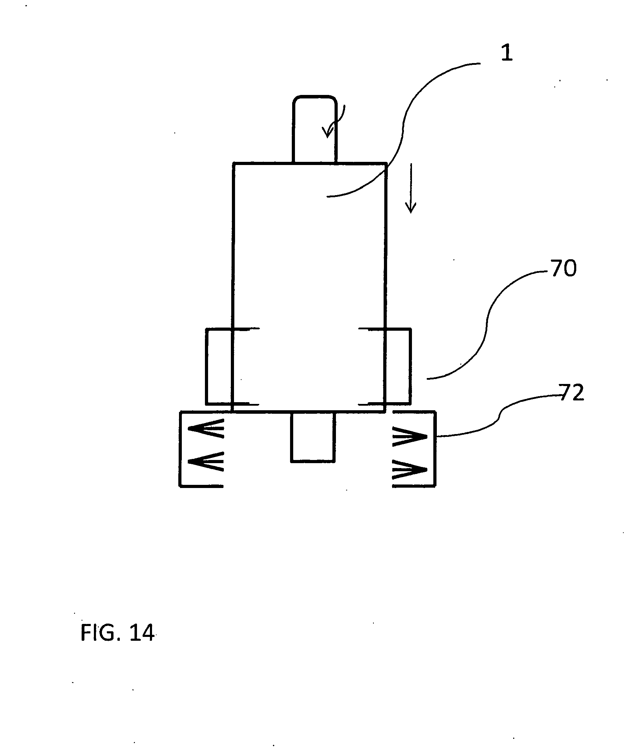

In the manufacturing process of the invention the roll is treated by induction hardening. During induction hardening of the roll the hard surface of the roll is formed. See figure 14 for a schematic view of the induction hardening step.

In one embodiment of the invention the roll is slowly moved downwards while an electric current or voltage frequency between 50-1000Hz is applied on through the inductor arrangement 70 during the induction hardening step. The roll 1 is cooled using water cooling 72 after the heating step, see figure 14. The formed hard surface is also called the working layer 4 of the roll and is about 1/6 (see figure 1, number 6) of the total diameter 2 of the roll 1. The roll barrel surface is heated quickly when lowered through a series of inductors comprising electrical coils leading into a quench box. The fast heat penetration of induction heating and immediate quenching using water produces a defined layer of uniform hardness of the surface of the roll. Both the necks and core of the roll remain at low temperature throughout the process. During induction hardening a frequencies typically between 50-1000Hz are applied on the surface of the roll 1 and a frequency selected from the lower parts of that interval gives deeper working layer 4 of the roll 1. Other factors that affect the depth of the formed working layer are the gap between inductors 70 (if several inductors are used). Also the gap or distance between the inductor 70 and the roll 1 affects the depth of the formed working layer 4. The induction hardening step 24 according to the invention could be of single, double or more frequency/ies.

The roll according to the invention explodes using conventional hardening techniques and induction heating is the most suitable technique for hardening of the roll according to the invention. Cooling of the roll 1 during the induction hardening 24 is performed by high flow of cold water.

In one embodiment of the invention the induction hardening 34 is made by double induction hardening and the cooling of the roll 1 after the induction hardening 24 is made by high flow of water which has a temperature of 40° C and is transported at a flow of about 300 m³/h and the roll is moved downwards at a speed of 0.3mm to 1 mm/s.

In one embodiment the induction hardening step 24 takes between 0.5-2h.

### Step 26: Tempering of said roll

In the manufacturing process of the invention the roll 1 is tempered. The purpose of the tempering step is to reduce the brittleness of the roll and to adjust the level of hardness. The tempering step 26 is a crucial step during the formation of the roll because it decreases the internal stresses. During the tempering step the roll achieves its final micro structure by diffusion and secondary precipitation of carbides. Air cooling is applied between the tempering heating steps. The rolls are tempered preferably 3 times at 450-530°C. The tempering step makes the roll obtain the required hardness level higher than 780 HV or between 780-840 HV. Precise control of time and temperature during the tempering process are critical to achieve a metal with well balanced microstructure for example tempered martensite so that the roll made according to the process of the invention after tempering comprises tempered martensite with a retained austenite rate lower than 5% in volume.

### Step 28: Machining of said roll

In the manufacturing process of the invention the roll is preferably treated by a machining step 28 before used in the mill. For example at the mill an application specific surface treatment of the roll is performed by grinding and other surface treatments to get the desired roughness and the related friction on the surface of the roll. Examples of surface treatments of the roll are for example: Laser beam texturing (LBT), Electro beam texturing (EBT) or electro discharge texturing (EDT).

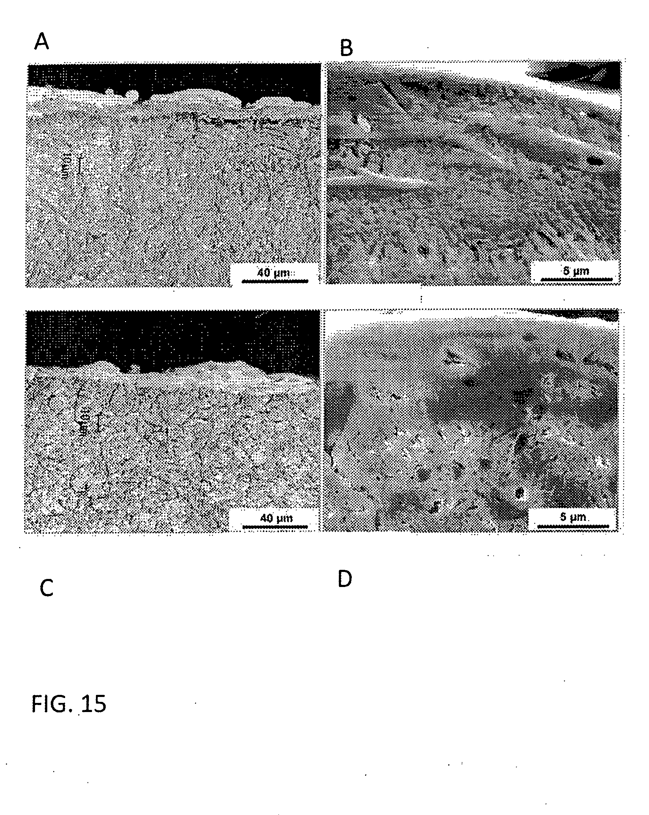

In one embodiment the roll is treated by grinding and electro discharge texturing (EDT) surface treatment. Figure 15 A-B show microstructure of the surface of a roll comprising a low chromium composition after Electro Discharge Texturing. Figure 15 C-D show microstructure of the surface of the roll according to the invention after Electro Discharge Texturing. Underneath the white layer 300 in figure 15 D there are the re-austenitized layer and a thinner softened zone, since this grade has a high tempering temperature. It is also noted that within the white layer in figure 15 D, the eutectic carbides 302 have not been affected by the electric arc energy. For comparison, these sorts of carbides are not present in the roll described in figure 15 A-B. The roll according to the invention has better properties and performance than a standard grade roll (see figure 15 A-B) due to the presence of the hard eutectic carbides in the white layer.

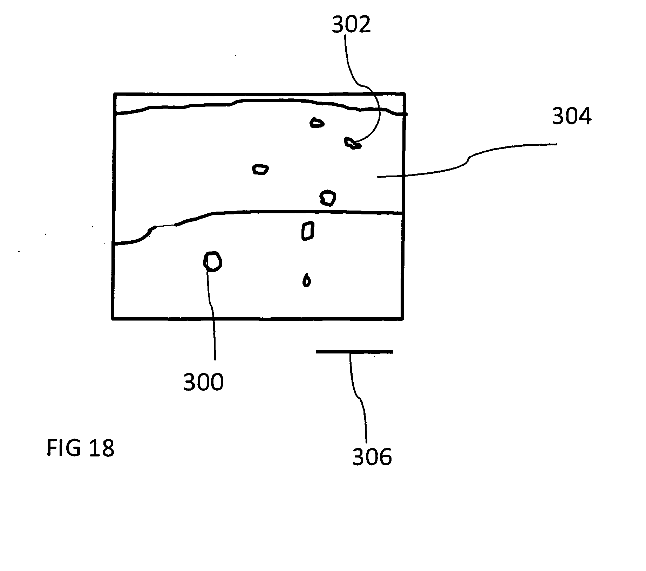

Figure 18 shows a more schematic figure of figure 15D, representing the microstructure of a roll surface according to the invention wherein the newly formed eutectic carbides 302, formed due to the re-melting, are present within the white layer 304. Also previously formed eutectic carbides 300 are shown in figure 18. The roll surface in figure 18 illustrates how the surface looks like after Electro Discharge Texturing according to the invention. The scale 306 represents 5µm.

### A roll 1 according to the invention made by the process described above

A typical roll according to the invention has a diameter of between 215 and 800 mm or between 250-700mm, total length including the necks is up to 6 meters, wherein the barrel length is between 1-3 meters. The typical weight of the roll is between 400 to 10000kg. The microstructure of a roll according to an embodiment of the invention is characterized in comprising tempered martensite with a retained austenite rate lower than 5% in volume, and wherein the roll comprises an open eutectic carbide network of less than 5 volume % eutectic carbides; and the roll (1) exhibits a hardness between 780 to 840 HV; and internal compressive stresses of between -300 to -500 MPa. These properties of the roll are due to the roll production process of the invention and also due to the chemical composition of the roll according to the chemical composition of the invention.

The roll according to the invention is intended to be used in a cold strip mill which requires rolls that withstands high pressures. The roll according to the invention is intended to be used in the cold strip mill as a work roll and is suitable in any stand in the rolling process and is suitable in 2Hi to 6Hi mills and may have roughness on the surface from 0.3-0.5µm which is required in the finishing stands to a roughness of 1.5-2. 5µm which is required in the initial stands.

The present invention will be understood more readily by reference to the following examples. However, these examples are intended to illustrate the roll properties of the invention and are not to be construed to limit the scope of the invention.

In table 4 different rolls are compared to the roll according to the invention. All the rolls comprise Mn in amounts between 0.2-0,5 in weight %.

### Two examples of the invention

ROLL1 according to the invention in table 4 is made using the process according to the invention, using a solidification rate of higher than 15°C/min in the working layer during the solidification interval and also using the induction heating using a frequency of 50-250 HZ and tempering 3 times at 450-530°C.

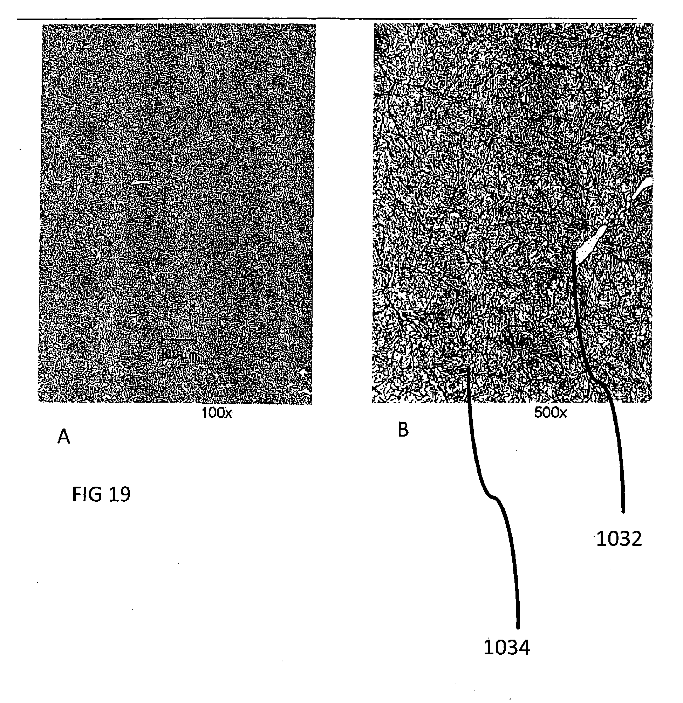

ROLL2 according to the invention in table 4 is made using the process according to the invention, using a solidification rate of 18°C/min in the working layer during the solidification interval and also using the induction heating using a frequency of 50-250 HZ and tempering 3 times; first at 490 ° C, then at 490 °C and in the last tempering at 480° C. Figure 19 shows the microstructure of a roll after tempering and induction hardening, sampled on 4mm depth from the surface of ROLL 2. The microstructure 1034 with the open eutectic network and the eutectic carbides 1032 of the roll is also shown in figure 19.

**Table 4**

| **Roll** | **C** | **Cr** | **Mo** | **V** | **Hardness (HV) average level** | **Secondary-hardening peak** | **Remarks** |
|---|---|---|---|---|---|---|---|
| TEST4 | 0.6 | 5 | 1.1 | 0.25 | 700 | No | To soft for work roll in cold rolling application |
| TEST5 | 0.8 | 10 | 1.1 | 0.25 | 730 | Slightly | To soft for late stand-Convenient in early stand |
| TEST6 | 0.7 | 5 | 2 | 0.5 | 750 | Slightly | Impossible to produce. Rejection due to formation of ferrite delta at high temperature during forging heat. See figure 16 A-D shows detrimental defects 502 on a roll generated during manufacturing of rolls with low chromium content. The detrimental defects 502 are for example porosities and shrinkage. |
| TEST7 | 0.9 | 8 | 2 | 2 | 820 | Sharply | Adapted for cold rolling (required for aluminium rolling) |
| ROLL1 | 0.9 | 8 | 1.5 | 1.45 | 800 | Sharply | Adapted for cold rolling and easier to grind compared to TEST 7, for example. |
| ROLL2 | 0.87 | 7.8 | 1.5 | 1.5 | 800 | Sharply | Adapted for cold rolling and easier to grind compared to TEST 7, for example. |

| | | | | | | | |
|---|---|---|---|---|---|---|---|
| The Mn content for the rolls in table 4 are all within the range 0.4-0.5, Si content for the rolls in table 4 are all within the range 0.2-2,0, Ni is always below 1%. | | | | | | | |

### Applications of the roll

Applications wherein the rolls are suitable are:

### Aluminium industry:

- single stands 4Hi no reversing mill

### Steel industry:

- 4 Hi Single stand reversing
- 4 Hi Tandem 4 and 5 stands for sheet in continuous and discontinuous process
- 4 Hi Tandem 4 and 5 stands for tinplate
- 6 Hi Tandem mill for sheet

### Roll usage

The forged roll according to the invention is suitable to be used for example as a work roll or intermediate roll in cold rolling mills or in for example;
- cold rolling reduction mills for early and finishing stands, reversible and non-reversible stands for tinplate, sheet, silicon steel, aluminum or copper.
- Cold rolling temper and/or skin pass mills;
- Mill configurations as 2-High, 4-High and 6-High stands with textured or non-textured surface.
- Cold rolling of AHSS steel grades.

### Roll surface

### Surface texture

One problem with known rolls is that the surface texture gets worn during usage of the roll. The surface texture is important because it ensures the friction coefficient to avoid slippage and/or derailment of the strip. Moreover it determines the strip surface texture which gives the superficial properties crucial for deep drawing and painting of rolled strip. The rolls according to the invention exhibit an increased ability to keep their surface texture due to a white layer of the roll and wherein the white layer comprises hard eutectic carbides as M₇C₃. In the working layer; the microstructure of the roll of the invention after final heat treatment consists of tempered martensite with a retained austenite rate lower than 5% in volume and carbides as MC and M₂C (M= metal, C= carbon) finely and homogeneously distributed into the matrix. This type of microstructure has shown to be important for keeping the surface texture of the roll.

### Roughness transfer

The roughness transfer of the roll surface changes during usage of the roll. The rolls according to the invention exhibit an increased ability to keep roughness transfer constant during rolling which is important for the life time of the roll. This is due to the special claimed composition and also due to the production method used when making the rolls.

### Schedule-free rolling in the mill

A problem during usage of rolls is that dirt which build up on the roll surface leaves a track line on the strip. In the working layer, the roll according to the inventions has a strong surface due to that the microstructure of the roll of the invention comprises tempered martensite with a retained austenite rate lower than 5% in volume and carbides as MC and M₂C finely and homogeneously distributed into the matrix, where M indicates metal and C indicates carbon. This special microstructure increases the possibilities for a schedule-free rolling.

### Spalling

Another problem with known rolls is that propagation of cracks inside the rolls is governed by the accumulative stresses, induced by the rolling operation and the field of residual internal stresses of the roll. A roll in service is submitted to a complex set of stresses. The roll according to the invention displays a low level of residual internal stresses and thus a better resistance to spalling and this makes the mill incident rate low.

The mechanical strength of the roll of the invention is better compared to a roll with the same alloy composition as the roll of the invention but made using another production method. The mechanical strength of the roll according to the invention is due to the formed open eutectic network in the working layer of the roll. This open eutectic network is formed during the cooling step in the roll-making process. A solidification rate higher than 15° C/min during the cooling step when making the ingot is crucial for the formation of the open network which is present in the rolls according to the invention.

Also, the accumulation of various tempering treatments at high temperature after hardening, for example between 450-530 °C during the production of the roll, induces an important relaxation of internal stresses of the roll. The internal stresses are minimized by using differential heating of the external layer. The hardness penetration depth of the roll according to the invention can be controlled between 20 and 120 mm on diameter measured from the roll surface and inwards. The internal compressive stresses of the roll of the invention are preferably between -300 to -500 MPa in absolute value or for example lower than -400 MPa.

### Roll microstructure

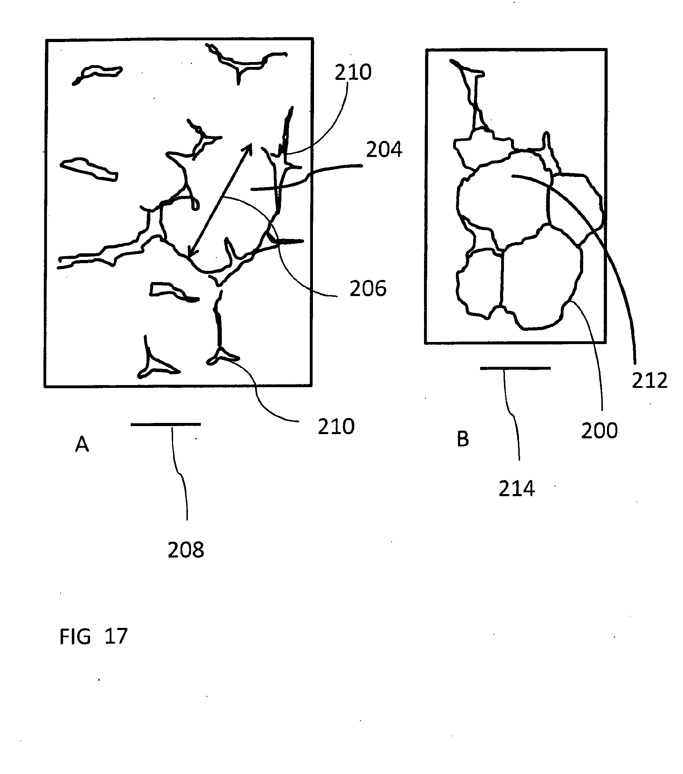

Figure 17A shows a schematic view of an exemplified roll microstructure according to the invention. In figure 17A is seen dendrite arms 210, comprising of eutectic carbides forming the eutectic cell structures 204 by forming an open carbide network. The open eutectic network comprising of dendrite arms 210 forming eutectic cells 204, which can be seen in figure 17A, is formed in the process due to the specific chemical composition according to the invention. The scale 208 represents 100µm.

In one embodiment of the invention, the microstructure of the roll of the invention comprises an open eutectic network which is only spread over one grain or two grains of the cell structures.

In comparison, figure 17B shows a closed eutectic network wherein the eutectic carbides 200 form a closed eutectic network with clearly separated eutectic cells 212. This type of network is unwanted in the roll according to the invention due to brittleness of the roll if it comprises this type of microstructure. The scale 214 represents 100µm.

The invention has been explained by means of different embodiments within the scope of the accompanying claims.

## Claims

1. A forged roll (1), comprising a steel composition comprising, in terms of % per weight, 0.8 to less than (<) 1 % C,
0.2 to 0.5 % Mn,
0.2 to 2.0 % Si,
7.0 to 13.0 % Cr,
0.6 to 1.6 % Mo,
more than (>) 1.0 to 3.0 % V,
further comprising;
less than (<) 1 % Ni
less than (<) 2 % W, and
less than (<) 1 % Nb, and
less than (<) 1 % Ti, and
less than (<) 0.5 % Ta, and
less than (<) 0.5% Zr, and
less than (<) 0.015 % P, and
less than (<) 0.015 % S, and
less than (<) 30 ppm O₂, and
less than (<) 100 ppm N₂, and
less than (<) 3 ppm H₂
less than (<) 0.4 % Cu
less than (<) 0.4 % Al
the remaining portion of the steel being Fe and unavoidable impurities;
and wherein the microstructure of the roll (1) comprises:
- tempered martensite with a retained austenite rate less than (<) 5 % per volume; and
- an open eutectic carbide network with eutectic carbides of less than (<) 5 % per volume;
and wherein the roll (1) exhibits:
- a hardness of between 780 to 840 HV; and
- internal compressive stresses of between -300 to -500 MPa.

2. The roll of the preceding claim, wherein the open eutectic carbide network delimits a cell-like pattern of eutectic cells

3. The roll according to any of the preceding claims, wherein the open eutectic carbide network comprises dendritic arms.

4. The roll of any of the preceding claims, wherein the microstructure is present at least in a working layer of the roll.

5. The roll of any of the preceding claims, wherein the C content in the steel composition is between 0.8 - 0.99 % C in terms of % per weight of total roll weight.

6. The roll of any of the preceding claims, wherein the C content in the steel composition is between 0.85 - 0.9 % C in terms of % per weight of total roll weight.

7. The roll of any of the preceding claims, wherein the Mn content in the steel composition is between 0.4 - 0.5 % Mn in terms of % per weight of total roll weight.

8. The roll of any of the preceding claims, wherein the Si content in the steel composition is between 0.2 - 1.5 % Si in terms of % per weight of total roll weight.

9. The roll of any of the preceding claims, wherein the Si content in the steel composition is between 0.85 - 1.15 % Si in terms of % per weight of total roll weight.

10. The roll of any of the preceding claims, wherein the Cr content in the steel composition is between 7.0 - 11 % Cr in terms of % per weight of total roll weight.

11. The roll of any of the preceding claims, wherein the Cr content in the steel composition is between 7.3 - less than (<) 8.0 % Cr in terms of % per weight of total roll weight.

12. The roll of any of the preceding claims, wherein the Mo content in the steel composition is between 1.45 - 1.55 % Mo in terms of % per weight of total roll weight.

13. The roll of any of the preceding claims, wherein the Ni content in the steel composition is less than (<) 0.3 Ni in terms of % per weight of total roll weight.

14. The roll of any of the preceding claims, wherein the V content in the steel composition is between 1.3 - 2.1 % V in terms of % per weight of total roll weight.

15. The roll of any of the preceding claims, wherein the V content in the steel composition is between 1.3 - 1.6 % V in terms of % per weight of total roll weight.

16. A roll of any of the preceding claims, wherein the steel composition consists, in terms of % per weight:
0.8 - 0.99 % C, and
0.4 - 0.5 % Mn, and
0.2 - 1.5 % Si, and
7.0 - 11 % Cr, and
0.6 - 1.6 % Mo, and
less than (<) 1.0 Ni, and
1.0 - 2,1 % V, and
less than (<) 0.015 % P, and
less than (<) 0.015 % S, and
less than (<) 30 ppm O₂, and
less than (<) 100 ppm N₂, and
less than (<) 3 ppm H₂, and
the remaining portion of the roll being substantially Fe and possible incidental and/or possibly unavoidable impurities.

17. A roll of any of the preceding claims, wherein the steel composition consists, in terms of % per weight:
0.85 - 0.9 % C, and
0.4 - 0.5 % Mn, and
0.85 - 1.15 % Si, and
7.3 - less than (<) 8.0 % Cr, and
1.45 - 1.55 % Mo, and
less than (<) 0.3 Ni, and
1.3 - 1.6 % V and
less than (<) 0.015 % P, and
less than (<) 0.015 % S, and
less than (<) 30 ppm O₂, and
less than (<) 100 ppm N₂, and
less than (<) 3 ppm H2, and
the remaining portion of the roll being substantially Fe and possible incidental and/or possibly unavoidable impurities.

18. The roll of any of the preceding claims, further being configured for use as a working roll in cold rolling.

19. The roll of any of the preceding claims, further having a weight of more than 400 kg.

20. The roll of any of the preceding claims, further having a diameter in the range of 215-800mm.

21. A process for manufacturing a forged roll, the process comprising the steps of:
a. Providing a steel composition according to the steel composition mentioned in claim 1
b. Manufacturing an ingot maintaining a solidification rate higher than 15°C/min both in the working layer and also in the core of the ingot in the solidification interval;
c. Forging the ingot to a roll;
d. Hardening the roll by induction heating;
e. Tempering the roll at a temperature between 450-530°C to reach hardness between 780 to 840HV;
thereby achieving a microstructure of the roll (1) that comprises:
- tempered martensite with a retained austenite rate less than (<) 5 % per volume; and
- an open eutectic carbide network with eutectic carbides of less than (<) 5 % per volume;
and wherein the roll (1) exhibits:
- a hardness of between 780 to 840HV; and
- internal compressive stresses of between -300 to-500 MPa.

22. A process according to claim 21 wherein the ingot is manufactured maintaining a solidification rate in the working layer as well as in the core in the range of 15°C/min to 55 °C /min, or alternatively 17 °C /min - 50°C/min, or alternatively 35 °C /min - 55°C/min, or alternatively 45 °C /min - 55°C/min.

23. The process according to any of claims 21-22, wherein the ingot is manufactured maintaining a solidification rate higher than 35 °C/min in the working layer of the ingot in the solidification interval.

24. The process of any of claims 21-23 wherein the solidification interval is between 1400-1200°C for said ingot.

25. The process of any of claims 21-24, wherein the ingot is manufactured maintaining a pre-selected solidification rate in an electro-slag refining furnace (ESR) technique process by controlling the ampere current supply according to a predetermined function of the solidification rate.

26. The process of any of claims 21-25, wherein the step of forging the ingot to a roll comprises the steps of:
a. Heating the ingot to a temperature of between 800 - 1200 °C or between 850 - 1100 °C, preferably for a period of about 6 hours;
b. Forging the ingot at a temperature above 800°C or above 850 °C;
c. Repeating steps a-b until the ingot has been formed to a roll that has desired shape and size.

27. The process of any of claims 21-26, further, after the forging step, comprising a step of preliminary heat treatment, preferably to a temperature of between 700 - 1100 °C or between 800 - 900 °C, which may include hydrogen diffusion treatment.

28. The process of any of claims 21-27, wherein the step of tempering the roll comprises the steps of:
a. Heating the roll to about 450 - 530 °C, preferably 3 times,
b. Air cooling the roll between the heating steps.

29. The process of any of claims 21-28, further comprising machining the roll to texturing a white layer comprising eutectic carbides.

30. The process of any of claim 29 wherein said eutectic carbides in the white layer are selected from M₇C₃.

31. The process of any of claims 21-30, further comprising the features of any of the claims 1-21.

32. Use of a roll according to any of claims 1-20 for cold rolling material requiring a high rolling load.

33. Use of a roll according to any of claims 1-20 for cold rolling of high strength materials like AHSS steel grades.

34. Use of a roll according to any of claims 1-20 for a selection of:
- cold rolling reduction mills for early and finishing stands, reversible and non-reversible stands for tinplate, sheet, silicon steel, stainless steel, aluminum and copper; or
- cold rolling temper and/or skin pass mills; or
- mill configurations as 2-High, 4-High and 6-High stands with textured or non textured surface.

35. Use of a roll according to any of claims 1-20 as a work roll.

36. A roll according to any of the preceding claims, wherein the roll is non-coated.

37. A roll according to any of the preceding claims, wherein the roll is coated with a selectable coating for example a chromium coating.

## Patentansprüche

1. Geschmiedete Walze (1), umfassend eine Stahlzusammensetzung umfassend, in Gewichtsprozent,
0,8 bis weniger als (<) 1% C,
0,2 bis 0,5 % Mn,
0,2 bis 2,0% Si,
7,0 bis 13,0% Cr,
0,6 bis 1,6 % Mo,
mehr als (>) 1,0 bis 3,0% V,
weiter umfassend:
weniger als (<) 1 % Ni,
weniger als (<) 2% W, und
weniger als (<) 1 % Nb, und
weniger als (<) 1% Ti, und
weniger als (<) 0,5% Ta, und
weniger als (<) 0,5% Zr, und
weniger als (<) 0,015% P, und
weniger als (<) 0,015% S, und
weniger als (<) 30ppm O₂, und
weniger als (<) 100ppm N₂, und
weniger als (<) 3ppm H₂,
weniger als (<) 0,4% Cu,
weniger als (<) 0,4% Al,
wobei der verbleibende Anteil des Stahls Fe und unvermeidliche Verunreinigungen sind,
und wobei die Mikrogefuege der Walze (1) umfasst:
- angelassenen Martensit mit einer Restaustenitmenge von weniger als (<) 5% pro Volumen; und
- ein offenes eutektisches Karbidnetzwerk mit eutektischen Karbiden von weniger als (<) 5% pro Volumen,
und wobei die Walze (1) aufweist:
- eine Härte zwischen 780 und 840 HV; und
- innere Druckspannungen zwischen -300 und -500 MPa.

2. Walze nach dem vorhergehenden Anspruch, wobei das offene eutektische Karbidnetzwerk ein zellenartiges Muster von eutektischen Zellen begrenzt.

3. Walze nach einem der vorhergehenden Ansprüche, wobei das offene eutektische Karbidnetzwerk dendritische Arme umfasst.

4. Walze nach einem der vorhergehenden Ansprüche, wobei die Mikrogefuege zumindest in einer Arbeitsschicht der Walze vorhanden ist.

5. Walze nach einem der vorhergehenden Ansprüche, wobei der C-Gehalt in der Stahlzusammensetzung zwischen 0,8 -0,99 % C in Gewichtsprozent des gesamten Walzengewichts beträgt.

6. Walze nach einem der vorhergehenden Ansprüche, wobei der C-Gehalt in der Stahlzusammensetzung zwischen 0,85 -0,9 % C in Gewichtsprozent des gesamten Walzengewichts beträgt.

7. Walze nach einem der vorhergehenden Ansprüche, wobei der Mn-Gehalt in der Stahlzusammensetzung zwischen 0,4 -0,5 % Mn in Gewichtsprozent des gesamten Walzengewichts beträgt.

8. Walze nach einem der vorhergehenden Ansprüche, wobei der Si-Gehalt in der Stahlzusammensetzung zwischen 0,2-1,5% Si in Gewichtsprozent des gesamten Walzengewichts beträgt.

9. Walze nach einem der vorhergehenden Ansprüche, wobei der Si-Gehalt in der Stahlzusammensetzung zwischen 0,85 - 1,15 % Si in Gewichtsprozent des gesamten Walzengewichts beträgt.

10. Walze nach einem der vorhergehenden Ansprüche, wobei der Cr-Gehalt in der Stahlzusammensetzung zwischen 7,0 - 11 % Cr in Gewichtsprozent des gesamten Walzengewichts beträgt.

11. Walze nach einem der vorhergehenden Ansprüche, wobei der Cr-Gehalt in der Stahlzusammensetzung zwischen 7,3 - weniger als (<) 8% Cr in Gewichtsprozent des gesamten Walzengewichts beträgt.

12. Walze nach einem der vorhergehenden Ansprüche, wobei der Mo-Gehalt in der Stahlzusammensetzung zwischen 1,45 - 1,55 % Mo in Gewichtsprozent des gesamten Walzengewichts beträgt.

13. Walze nach einem der vorhergehenden Ansprüche, wobei der Ni-Gehalt in der Stahlzusammensetzung weniger als (<) 0,3 % Ni in Gewichtsprozent des gesamten Walzengewichts beträgt.

14. Walze nach einem der vorhergehenden Ansprüche, wobei der V-Gehalt in der Stahlzusammensetzung zwischen 1,3 - 2,1 % V in Gewichtsprozent des gesamten Walzengewichts beträgt.

15. Walze nach einem der vorhergehenden Ansprüche, wobei der V-Gehalt in der Stahlzusammensetzung zwischen 1,3 - 1,6 % V in Gewichtsprozent des gesamten Walzengewichts beträgt.

16. Walze nach einem der vorhergehenden Ansprüche, wobei die Stahlzusammensetzung besteht aus, in Gewichtsprozent:
0,8 - 0,99% C, und
0,4 - 0,5 % Mn, und
0,2 - 1,5 % Si, und
7,0-11%Cr,und
0,6 - 1,6 % Mo, und
weniger als (<) 1,0% Ni, und
1,0 - 2,1 % V, und
weniger als (<) 0,015 % P, und
weniger als (<) 0,015 % S, und
weniger als (<) 30 ppm O₂, und
weniger als (<) 100 ppm N₂, und
weniger als (<) 3 ppm H₂, und
wobei der verbleibende Teil der Walze im wesentlichen aus Fe und möglichen zufälligen und/oder möglichen unvermeidbaren Verunreinigungen besteht.

17. Walze nach einem der vorhergehenden Ansprüche, wobei die Stahlzusammensetzung besteht aus, in Gewichtsprozent:
0,85 - 0,9 % C, und
0,4 - 0,5 % Mn, und
0,85 - 1,15 % Si, und
7,3 - weniger als (<) 8 % Cr, und
1,45 - 1,55 % Mo, und
weniger als (<) 0,3 % Ni, und
1,3 - 1,6 % V, und
weniger als (<) 0,015 % P, und
weniger als (<) 0,015 % S, und
weniger als (<) 30 ppm O₂, und
weniger als (<) 100 ppm N₂, und
weniger als (<) 3 ppm H₂, und
wobei der verbleibende Teil der Walze im wesentlichen aus Fe und möglichen zufälligen und/oder möglichen unvermeidbaren Verunreinigungen besteht.

18. Walze nach einem der vorhergehenden Ansprüche, wobei die Walze weiter zur Verwendung als eine Arbeitswalze beim Kaltwalzen ausgelegt ist.

19. Walze nach einem der vorhergehenden Ansprüche, wobei die Walze weiter ein Gewicht von mehr als 400kg aufweist.

20. Walze nach einem der vorhergehenden Ansprüche, wobei die Walze weiter einen Durchmesser im Bereich von 215 - 800 mm aufweist.

21. Verfahren zum Herstellen einer geschmiedeten Walze, wobei das Verfahren die Schritte umfasst:
a. Bereitstellen einer Stahlzusammensetzung gemäß der in Anspruch 1 genannten Stahlzusammensetzung
b. Herstellen eines Blocks, der eine Erstarrungsgeschwindigkeit von mehr als 15°C/min sowohl in der Arbeitsschicht als auch im Kern des Blocks in dem Erstarrungsintervall aufweist;
c. Schmieden des Blocks zu einer Walze;
d. Härten der Walze durch Induktionserwärmung;
e. Anlassen der Walze bei einer Temperatur zwischen 450-530°C, um eine Härte zwischen 780 bis 840 HV zu erreichen;
dadurch erreichen eines MikroGefueges der Walze (1), welche umfasst:
- angelassenen Martensit mit einer Restaustenitmenge von weniger als (<) 5% pro Volumen; und
- ein offenes eutektisches Karbidnetzwerk mit eutektischen Karbiden von weniger als (<) 5% pro Volumen,
und wobei die Walze (1) aufweist:
- eine Härte zwischen 780 und 840 HV; und
- innere Druckspannungen zwischen -300 und -500 MPa.

22. Verfahren nach Anspruch 21, wobei der Block hergestellt wird unter Aufrechterhaltung einer Erstarrungsgeschwindigkeit in der Arbeitsschicht sowie im Kern im Bereich von 15°C/Min - 55°C/Min, oder alternativ 17°C/min - 50°C/min, oder alternativ 35°C/min - 55°C/min, oder alternativ 45°C/min - 55°C/min.

23. Verfahren nach einem der Ansprüche 21 - 22, wobei der Block hergestellt wird unter Aufrechterhaltung einer Erstarrungsgeschwindigkeit von mehr als 35°C/min in der Arbeitsschicht des Blocks in dem Erstarrungsintervall.

24. Verfahren nach einem der Ansprüche 21 bis 23, wobei das Erstarrungsintervall für den Block zwischen 1400 und 1200°C liegt.

25. Verfahren nach einem der Ansprüche 21 bis 24, wobei der Block hergestellt wird unter Aufrechterhaltung einer vorgewählten Erstarrungsgeschwindigkeit in einem Elektroschlacke-Umschmelzofen (ESR)-Verfahren durch Steuern der Amperestromzufuhr gemäß einer vorbestimmten Funktion der Erstarrungsgeschwindigkeit.

26. Verfahren nach einem der Ansprüche 21 bis 25, wobei der Schritt des Schmiedens des Blocks zu einer Walze die Schritte umfasst:
a. Erhitzen des Blocks auf eine Temperatur zwischen 800 - 1200 °C oder zwischen 850 -1100°C, vorzugsweise für einen Zeitraum von etwa 6 Stunden;
b. Schmieden des Blocks bei einer Temperatur über 800°C oder über 850°C;
c. Wiederholen der Schritte a-b, bis der Block zu einer Walze geformt wurde, der die gewünschte Form und Größe aufweist.

27. Verfahren nach einem der Ansprüche 21-26, weiter umfassend, nach dem Schmiedeschritt, einen Schritt vorläufiger Hitzebehandlung, vorzugsweise auf eine Temperatur von zwischen 700 - 1100°C oder zwischen 800 - 900°C, was eine Wasserstoffdiffusionsbehandlung einschließen kann.

28. Verfahren nach einem der Ansprüche 21 bis 27, wobei der Schritt des Anlassens der Walze die Schritte umfasst:
a. Erhitzen der Walze auf etwa 450 -530°C, vorzugsweise dreimal;
b. Luftkühlen der Walze zwischen den Heizschritten.

29. Verfahren nach einem der Ansprüche 21 bis 28, weiter umfassend ein Bearbeiten der Walze zum Strukturieren einer weißen Schicht, die eutektische Karbide umfasst.

30. Verfahren nach Anspruch 29, wobei die eutektischen Karbide in der weißen Schicht aus M₇C₃ gewählt sind.

31. Verfahren nach einem der Ansprüche 21-30, weiter umfassend die Merkmale aus irgendeinem der Ansprüche 1-21.

32. Verwendung einer Walze nach einem der Ansprüche 1 bis 20 zum Kaltwalzen eines Materials, das eine hohe Walzbelastung erfordert.

33. Verwendung einer Walze nach einem der Ansprüche 1 bis 20 zum Kaltwalzen von hochfesten Materialien wie AHSS Stahlgüten.

34. Verwendung einer Walze nach einem der Ansprüche 1 bis 20 für eine Auswahl aus:
Kaltwalz-Reduzierwalzwerke für Vor- und Fertiggerüste, Umkehr- und Einweggerüste für Weißblech, Blech, Siliziumstahl, Edelstahl, Aluminium und Kupfer; oder
Kaltwalz-Dressierwalzwerke und/oder -Dressiergerüste; oder
Walzwerk-Konfigurationen als Duowalzgerüst, Quartowalzgerüst und Sextowalzgerüst mit strukturierter oder nicht-strukturierter Oberfläche.

35. Verwendung einer Walze nach einem der Ansprüche 1 bis 20 als Arbeitswalze.

36. Walze nach einem der vorhergehenden Ansprüche, wobei die Walze nicht beschichtet ist.

37. Walze nach einem der vorhergehenden Ansprüche, wobei die Walze mit einer wählbaren Beschichtung beschichtet ist, beispielsweise einer Chrombeschichtung.

## Revendications

1. Cylindre forgé (1), comprenant une composition d'acier comprenant, en termes de % par poids,
de 0,8 à moins de (<) 1 % de C,
de 0,2 à 0,5 % de Mn,
de 0,2 à 2,0 % de Si,
de 7,0 à 13,0 % de Cr,
de 0,6 à 1,6 % de Mo,
plus de (>) 1,0 à 3,0 % de V,
comprenant en outre ;
moins de (<) 1 % de Ni,
moins de (<) 2 % de W, et
moins de (<) 1 % de Nb, et
moins de (<) 1 % de Ti, et
moins de (<) 0,5 % de Ta, et
moins de (<) 0,5 % de Zr, et
moins de (<) 0,015 % de P, et
moins de (<) 0,015% de S, et
moins de (<) 30 ppm d'O₂, et
moins de (<) 100 ppm de N₂, et
moins de (<) 3 ppm d'H₂,
moins de (<) 0,4% de Cu,
inférieur à (<) 0,4% de Al,
la partie restante de l'acier étant constituée de Fe et d'impuretés inévitables,
dont la microstructure du cylindre (1) comprend :
- de la martensite revenue avec un taux d'austénite résiduelle inférieur à (<) 5 % en volume ;
- et un réseau ouvert de carbures eutectiques avec des carbures eutectiques à moins de (<) 5 % en volume ;
et dans lequel le cylindre (1) présente :
- une dureté comprise entre 780 à 840 HV, et
- des contraintes internes de compression entre -300 et -500 MPa.

2. Le cylindre selon la revendication précédente, dans lequel le réseau ouvert de carbures eutectiques délimite un motif cellulaire de cellules eutectiques.

3. Le cylindre selon l'une quelconque des revendications précédentes, dans lequel le réseau ouvert de carbures eutectiques comprend des bras dendritiques.

4. Le cylindre selon l'une quelconque des revendications précédentes, dans lequel la microstructure est au moins présente dans une couche travaillante du cylindre.

5. Le cylindre selon l'une quelconque des revendications précédentes, dans lequel la teneur en C dans la composition de l'acier est comprise entre 0,8 et 0,99 % de C en termes de % en poids du poids total du cylindre.

6. Le cylindre selon l'une quelconque des revendications précédentes, dans lequel la teneur en C dans la composition de l'acier est comprise entre 0,85 et 0,9 % de C en termes de % en poids du poids total du cylindre.

7. Le cylindre selon l'une quelconque des revendications précédentes, dans lequel la teneur en Mn dans la composition de l'acier est comprise entre 0,4 et 0,5 % de Mn en termes de % en poids du poids total du cylindre.

8. Le cylindre selon l'une quelconque des revendications précédentes, dans lequel la teneur en Si dans la composition de l'acier est comprise entre 0,2 et 1,5 % de Si en termes de % en poids du poids total du cylindre.

9. Le cylindre selon l'une quelconque des revendications précédentes, dans lequel la teneur en Si dans la composition de l'acier est comprise entre 0,85 et 1,15 % de Si en termes de % en poids du poids total du cylindre.

10. Le cylindre selon l'une quelconque des revendications précédentes, dans lequel la teneur en Cr dans la composition de l'acier est comprise entre 7,0 et 11 % de Cr en termes de % en poids du poids total du cylindre.

11. Le cylindre selon l'une quelconque des revendications précédentes, dans lequel la teneur en Cr dans la composition de l'acier est comprise entre 7,3 et moins de (<) 8,0 % de Cr en termes de % en poids du poids total du cylindre.

12. Le cylindre selon l'une quelconque des revendications précédentes, dans lequel la teneur en Mo dans la composition de l'acier est comprise entre 1,45 et 1,55 % de Mo en termes de % en poids du poids total du cylindre.

13. Le cylindre selon l'une quelconque des revendications précédentes, dans lequel la teneur en Ni dans la composition de l'acier est inférieure à (<) 0,3 % de Ni en termes de % en poids du poids total du cylindre.

14. Le cylindre selon l'une quelconque des revendications précédentes, dans lequel la teneur en V dans la composition de l'acier est comprise entre 1,3 et 2,1 % de V en termes de % en poids du poids total du cylindre.

15. Le cylindre selon l'une quelconque des revendications précédentes, dans lequel la teneur en V dans la composition de l'acier est comprise entre 1,3 et 1,6 % de V en termes de % en poids du poids total du cylindre.

16. Un cylindre selon l'une quelconque des revendications précédentes, dans lequel la composition de l'acier comprend, en termes de % en poids :
de 0,8 à 0,99 % de C, et
de 0.4 à 0.5 % de Mn, et
de 0,2 à 1,5 % de Si, et
de 7,0 à 11 % de Cr, et
de 0,6 à 1,6 % de Mo, et
moins de (<) 1,0 % Ni, et
de 1,0 à 2,1% de V, et
moins de (<) 0,015 % de P, et
moins de (<) 0,015 % de S, et
moins de (<) 30 ppm O₂, et
moins de (<) 100 ppm N₂, et
moins de (<) 3 ppm H₂, et
la partie restante du cylindre étant en grande partie constituée de Fe et de possibles impuretés accidentelles et / ou potentiellement inévitables.

17. Un cylindre selon l'une quelconque des revendications précédentes, dans lequel la composition de l'acier comprend, en termes de % en poids :
de 0,85 à 0,9 % de C, et
de 0.4 à 0.5 % de Mn, et
de 0,85 à 1,15 % de Si, et
de 7,3 à moins de (<) 8.0 % de Cr, et
de 1,45 à 1,55 % de Mo, et
moins de (<) 0,3 % de Ni, et
de 1.3 à 1.6 % de V, et
moins de (<) 0,015 % de P, et
moins de (<) 0,015 % de S, et
moins de (<) 30 ppm d'O₂, et
moins de (<) 100 ppm de N₂, et
moins de (<) 3 ppm d'H₂, et
la partie restante du cylindre étant en grande partie constituée de Fe et possibles impuretés accidentelles et / ou éventuellement inévitables.

18. Le cylindre selon l'une quelconque des revendications précédentes, configuré en outre pour être utilisé comme un cylindre de travail pour le laminage à froid.

19. Le cylindre selon l'une quelconque des revendications précédentes, ayant en outre un poids de plus de 400 kg.

20. Le cylindre selon l'une quelconque des revendications précédentes, ayant en outre un diamètre situé dans la plage allant de 215 à 800 mm.

21. Un procédé de fabrication d'un cylindre forgé, le procédé comprenant les étapes consistant à :
a. utiliser une composition d'acier conforme à la composition d'acier mentionnée dans la revendication 1
b. fabriquer un lingot en maintenant une vitesse de solidification supérieure à 15°C / min à la fois dans la couche de travail et également au coeur du lingot dans l'intervalle de solidification ;
c. forger le lingot en un cylindre ;
d. tremper le cylindre par chauffage par induction ;
e. effectuer les revenus du cylindre à une température entre 450 et 530° C pour atteindre une dureté comprise entre 780 et 840 HV ;
obtenant ainsi une microstructure du cylindre (1) qui comprend :
- de la martensite revenue avec un taux d'austénite résiduelle inférieur à (<) 5 % par volume ; et
- un réseau ouvert de carbures eutectiques avec des carbures eutectiques à moins de (<) 5 % par volume ;
et dont le cylindre (1) présente :
- une dureté comprise entre 780 et 840 HV, et
- des contraintes internes de compression entre -300 et -500 MPa.

22. Un procédé selon la revendication 21, dans lequel le lingot est fabriqué en maintenant une vitesse de solidification de la couche de travail, ainsi que dans le coeur dans un intervalle de 15°C / min à 55°C / min, ou encore de 17°C / min à 50°C / min, ou encore de 35°C / min à 55°C / min, ou encore de 45°C / min à 55°C / min.

23. The procédé selon l'une quelconque des revendications 21 à 22, dans lequel le lingot est fabriqué en maintenant une vitesse de solidification supérieure à 35°C / min dans la couche de travail du lingot dans l'intervalle de solidification.

24. Le procédé selon l'une quelconque des revendications 21 à 23, dans lequel l'intervalle de solidification est compris entre 1400 et 1200°C pour ledit lingot.

25. Le procédé de l'une quelconque des revendications 21 à 24, dans lequel le lingot est fabriqué en maintenant une vitesse de solidification prédéfinie selon un procédé technique utilisant un four de fusion avec affinage sous laitier électro-conducteur (ESR - electro slag refining furnace), en contrôlant l'alimentation du courant selon la vitesse de solidification prédéterminée.

26. Le procédé de l'une quelconque des revendications 21 à 25, dans lequel l'étape de forgeage du lingot en un cylindre comprend les étapes consistant à :
a. chauffer le lingot à une température comprise entre 800 et 1200°C ou entre 850 et 1100°C, de préférence pendant une période d'environ 6 heures ;
b. forger le lingot à une température supérieure à 800°C ou au-dessus de 850°C ;
c. répéter les étapes a-b jusqu'à ce que le lingot ait été formé en un cylindre qui a la forme et la taille souhaitées.

27. Le procédé de l'une quelconque des revendications 21 à 26, comprenant en outre, après l'étape de forgeage, une étape de traitement thermique préliminaire, de préférence à une température comprise entre 700 et 1100°C ou entre 800 et 900°C, pouvant inclure un traitement de diffusion d'hydrogène.

28. Le procédé de l'une quelconque des revendications 21 à 27, dans lequel l'étape de revenu du cylindre comprend les étapes consistant à :
a. chauffer le cylindre entre environ 450 et 530°C, de préférence 3 fois,
b. refroidir le cylindre à l'air entre les étapes de chauffage.

29. Le procédé de l'une quelconque des revendications 21 à 28, comprenant l'usinage du cylindre jusqu'à la texturation résultant en une couche blanche comprenant des carbures eutectiques.

30. Le procédé selon la revendication 29, dans lequel lesdits carbures eutectiques dans la couche blanche sont du type M₇C₃.

31. Le procédé selon l'une quelconque des revendications 21 à 30, comprenant en outre les caractéristiques de l'une quelconque des revendications 1 à 21.

32. Utilisation d'un cylindre selon l'une quelconque des revendications 1 à 20 pour laminage à froid de matériaux nécessitant une importante force de laminage.

33. Utilisation d'un cylindre selon l'une quelconque des revendications 1 à 20 pour laminer à froid des matériaux à haute résistance mécanique tels que des aciers AHSS.

34. Utilisation d'un cylindre selon l'une quelconque des revendications 1 à 20 pour une sélection de :
- laminoirs de réduction à froid pour des cages ébaucheuses et finisseuses, des cages réversibles et non réversibles pour du fer-blanc, de la tôle, de l'acier au silicium, de l'acier inoxydable, de l'aluminium et du cuivre, ou
- des laminoirs à froid d'écrouissage et / ou de dressage, ou
- des configurations de laminoirs telles que des cages dites duo, quarto et sixto avec des surfaces texturées ou non texturées.

35. Utilisation d'un cylindre selon l'une quelconque des revendications 1 à 20 en tant que cylindre de travail.

36. Un cylindre selon l'une quelconque des revendications précédentes, tel que le cylindre est non revêtu.

37. Un cylindre selon l'une quelconque des revendications précédentes, tel que le cylindre est revêtu d'un revêtement pouvant être sélectionné, par exemple un revêtement de chrome.
